# EUROPEAN PATENT APPLICATION

(11) **EP 4 075 682 A1**
(43) Date of publication of application: **19.10.2022**
(21) Application number: 20913681.1
(22) Date of filing: 14.01.2020
(51) Int. Cl.: H04B 7/06, H04W 72/04

(54) **METHOD AND APPARATUS FOR CHANNEL MEASUREMENT**

(71) Applicant: Huawei Technologies Co., Ltd., Longgang Shenzhen, Guangdong 518129 (CN)
(72) Inventor: JIN, Huangping, Shenzhen, Guangdong 518129 (CN); JIN, Shi, Nanjing, Jiangsu 210096 (CN); LIU, Yong, Shenzhen, Guangdong 518129 (CN); BI, Xiaoyan, Shenzhen, Guangdong 518129 (CN)
(74) Representative: Isarpatent
(86) International application number: PCT/CN2020/071900
(87) International publication number: WO 2021/142605

(57) **Abstract**

This application provides a channel measurement method and an apparatus. The channel measurement method includes: The network device obtains first information, and obtains third downlink channel information based on the first information. The first information is obtained based on second information and third information, the second information is obtained based on first downlink channel information obtained by a terminal device through measurement, and the third information is obtained based on uplink channel information and/or second downlink channel information obtained by the terminal device through measurement. The network device considers auxiliary information in a process of reconstructing downlink channel information, so that precision of the reconstructed channel information can be improved.

## Description

### TECHNICAL FIELD

This application relates to the communication field, and more specifically, to a channel measurement method and an apparatus.

### BACKGROUND

In a massive multiple-input multiple-output (massive multiple-input multiple-output, Massive MIMO) technology, a network device may reduce interference between a plurality of terminal devices and interference between a plurality of signal flows of a same terminal device through precoding. This helps improve signal quality, implement spatial multiplexing, and improve spectrum utilization. The terminal device may determine a precoding matrix based on downlink channel measurement, and enables, through feedback, the network device to obtain a precoding matrix that is the same as or similar to the precoding matrix determined by the terminal device.

Currently, a channel measurement and feedback method based on artificial intelligence (artificial intelligence, AI) is known. Through joint training, a terminal device and a network device respectively obtain and store an encoder and a decoder. Specifically, the terminal device obtains downlink channel information based on downlink pilot measurement, obtains, by using the encoder, compressed codeword information fed back to an air interface, and feeds back the compressed codeword information to the network device through a feedback link. The network device receives the compressed codeword information fed back by the terminal device, decodes the compressed codeword information by using the decoder, and obtains the channel information fed back by the terminal. However, in this feedback manner, to obtain an accurate channel reconstruction result, a dimension of a compressed codeword that is fed back is still large. When only a compressed codeword with a low dimension is fed back, precision of reconstructed channel information obtained by the network device is not high.

### SUMMARY

This application provides a channel measurement method and an apparatus, to improve precision of reconstructed channel information.

According to a first aspect, a channel measurement method is provided. The channel measurement method may be performed by a network device, or may be performed by a chip or a circuit disposed in the network device. This is not limited in this application. For ease of description, an example in which the channel measurement method is performed by the network device may be used below for description.

The channel measurement method includes the following steps.

A network device obtains first information, where the first information is obtained based on second information and third information, the second information is obtained based on first downlink channel information obtained by a terminal device through measurement, and the third information is obtained based on auxiliary information, where the auxiliary information includes uplink channel information and/or second downlink channel information obtained by the terminal device through measurement. The network device obtains third downlink channel information based on the first information.

According to the channel measurement method provided in this embodiment of this application, the first information obtained by the network device is information obtained based on the second information and the third information. The second information is obtained based on the first downlink channel information obtained by the terminal device through measurement, and the third information is obtained based on the auxiliary information. Therefore, the third downlink channel information obtained by the network device based on the first information may be understood as that the network device integrates the first downlink channel information and the auxiliary information in a process of reconstructing downlink channel information, so that precision of the reconstructed downlink channel information can be improved.

It should be understood that the first downlink channel information, the second downlink channel information, and the third downlink channel information are information that is about a downlink channel between the terminal device and the network device and that is obtained in different manners. For ease of description, the third information may be understood as information obtained based on the uplink channel information and/or the second downlink channel information obtained by the terminal device through measurement.

With reference to the first aspect, in some implementations of the first aspect, the first information includes a first compressed codeword, the second information includes a second compressed codeword, the third information includes a third compressed codeword, and the first compressed codeword is obtained based on the second compressed codeword and the third compressed codeword, where the second compressed codeword is a compressed codeword obtained by a first encoder by encoding the first downlink channel information, the third compressed codeword is a compressed codeword obtained by a second encoder by encoding the auxiliary information, and the first encoder and the second encoder are encoders obtained through training.

In a possible implementation, the first information is the first compressed codeword, the second information is the second compressed codeword obtained by the first encoder by encoding the first downlink channel information, the third information is the third compressed codeword obtained by the second encoder by encoding the auxiliary information, and the first compressed codeword is the compressed codeword obtained by combining the second compressed codeword and the third compressed codeword.

Specifically, the first encoder and the second encoder are encoders obtained through training.

It should be understood that, in this embodiment of this application, that the first encoder and the second encoder are encoders obtained through training may be understood as that the first encoder and the second encoder are respectively AI networks obtained through training based on a large quantity of data sets, or the first encoder and the second encoder are respectively obtained through machine learning.

With reference to the first aspect, in some implementations of the first aspect, when the second encoder is deployed in the network device, that the network device obtains the first compressed codeword includes: The network device obtains the auxiliary information, and encodes the auxiliary information based on the second encoder, to obtain the third compressed codeword. The network device receives the second compressed codeword. The network device combines the second compressed codeword and the third compressed codeword to obtain the first compressed codeword.

According to the channel measurement method provided in this embodiment of this application, the second encoder may be deployed on the network device side. The network device may encode, based on the second encoder, the auxiliary information obtained by the network device, to obtain the third compressed codeword. In addition, the network device may further receive the second compressed codeword from the terminal device, and finally combine the second compressed codeword and the third compressed codeword to obtain the first compressed codeword.

With reference to the first aspect, in some implementations of the first aspect, when the second encoder is deployed in the terminal device, that the network device obtains the first compressed codeword includes: The network device separately receives the second compressed codeword and the third compressed codeword. The network device combines the second compressed codeword and the third compressed codeword to obtain the first compressed codeword; or
when the second encoder is deployed in the terminal device, that the network device obtains the first compressed codeword includes:
the network device receives the first compressed codeword, where the first compressed codeword is obtained by combining the second compressed codeword and the third compressed codeword.

According to the channel measurement method provided in this embodiment of this application, the second encoder may be deployed on the terminal device side.

Optionally, the terminal device may encode, based on the second encoder, the auxiliary information to obtain the third compressed codeword, and send both the second compressed codeword and the third compressed codeword to the network device, so that the network device combines the second compressed codeword and the third compressed codeword to obtain the first compressed codeword.

Optionally, the terminal device may encode the auxiliary information based on the second encoder to obtain the third compressed codeword, combine the second compressed codeword and the third compressed codeword to obtain the first compressed codeword, and send the first compressed codeword to the network device.

With reference to the first aspect, in some implementations of the first aspect, the first information includes a first compressed codeword, the second information includes a second compressed codeword, the third information includes the auxiliary information, and the first compressed codeword is obtained based on the second compressed codeword and the auxiliary information, where the second compressed codeword is a compressed codeword obtained by a first encoder by encoding downlink channel information obtained by the terminal device through measurement, and the first encoder is an encoder obtained through training.

In a possible implementation, the first information is a first compressed codeword, the second information is a second compressed codeword obtained by a first encoder by encoding the first downlink channel information, the third information is the auxiliary information, and the first compressed codeword is a compressed codeword obtained by combining the second compressed codeword and the auxiliary information. Specifically, the first encoder is an encoder obtained through training.

With reference to the first aspect, in some implementations of the first aspect, that a network device obtains first information includes: The network device obtains the auxiliary information. The network device receives the second compressed codeword. The network device combines the second compressed codeword and the auxiliary information to obtain the first compressed codeword.

According to the channel measurement method provided in this embodiment of this application, the network device may obtain the auxiliary information, receive the second compressed codeword from the terminal device, and combine the auxiliary information obtained by the network device and the received second compressed codeword to obtain the first compressed codeword.

With reference to the first aspect, in some implementations of the first aspect, that the network device obtains the first compressed codeword includes: The network device receives the first compressed codeword obtained by combining the second compressed codeword and the auxiliary information.

According to the channel measurement method provided in this embodiment of this application, the terminal device may obtain the auxiliary information and the second compressed codeword, combine the auxiliary information and the second compressed codeword to obtain the first compressed codeword, and send the first compressed codeword to the network device.

With reference to the first aspect, in some implementations of the first aspect, the first information includes a first compressed codeword, the second information includes the first downlink channel information, and the third information includes the auxiliary information, where the first compressed codeword is a compressed codeword obtained by a third encoder by encoding the combined auxiliary information and first downlink channel information, and the third encoder is an encoder obtained through training. The network device obtains the first compressed codeword includes: The network device receives the first compressed codeword.

In a possible implementation, the first information is the first compressed codeword, the second information is the first downlink channel information, the third information is the auxiliary information, and the first compressed codeword is the compressed codeword obtained by the third encoder by encoding the fourth information obtained by combining the first downlink channel information and the auxiliary information. Specifically, the third encoder is an encoder obtained through training.

In this implementation, the third encoder may be deployed on the terminal device side, so that the terminal device obtains the auxiliary information and the first downlink channel information, combines the auxiliary information and the first downlink channel information to obtain the fourth information, encodes the fourth information based on the third encoder to obtain the first compressed codeword, and sends the first compressed codeword to the network device.

With reference to the first aspect, in some implementations of the first aspect, that the network device obtains third downlink channel information based on the first information includes: The network device decodes the first compressed codeword based on a first decoder, to obtain the third downlink channel information, where the first decoder is a decoder obtained through training. When a dimension of the first compressed codeword is consistent with a dimension of the second compressed codeword, a decompression rate of the first decoder is consistent with a compression rate of the first encoder; or when a dimension of the first compressed codeword is inconsistent with a dimension of the second compressed codeword, a decompression rate of the first decoder is inconsistent with a compression rate of the first encoder.

After obtaining the first compressed codeword, the network device may decode the first compressed codeword based on the first decoder to obtain reconstructed third downlink channel information. Specifically, the first decoder is a decoder obtained through training. The decompression rate of the first decoder may be the same as or different from the compression rate of the first encoder.

With reference to the first aspect, in some implementations of the first aspect, the third information includes the auxiliary information, and that a network device obtains first information includes: The network device receives a second compressed codeword, where the second compressed codeword is a compressed codeword obtained by a first encoder by encoding the first downlink channel information, and the first encoder is an encoder obtained through training. The network device decodes the second compressed codeword based on a second decoder, to obtain the second information, where the second decoder is a decoder obtained through training.

The network device obtains the auxiliary information. The network device combines the second information and the auxiliary information to obtain the first information.

In a possible implementation, the first information is information obtained by combining the second information and the auxiliary information. The terminal device encodes the first downlink channel information based on the first encoder to obtain the second compressed codeword. After receiving the second compressed codeword from the terminal device, the network device decodes the second compressed codeword based on the second decoder to obtain the second information. The network device combines the auxiliary information obtained by the network device and the second information obtained through decoding, to obtain the first information.

Further, in this implementation, the first information obtained by the network device may be understood as third downlink channel information reconstructed by the network device. Alternatively, in this implementation, the network device may decode the first information based on the third decoder to obtain the third downlink channel information reconstructed by the network device.

With reference to the first aspect, in some implementations of the first aspect, the second downlink channel information is prior downlink channel information obtained by the terminal device through measurement, and the third downlink channel information is downlink channel information reconstructed by the network device.

In this embodiment of this application, the second downlink channel information may be understood as the downlink channel prior information obtained by the terminal device through measurement, and the third downlink channel information may be understood as the downlink channel information reconstructed by the network device.

According to a second aspect, a channel measurement method is provided. The channel measurement method may be performed by a terminal device, or may be performed by a chip or a circuit disposed in the terminal device. This is not limited in this application. For ease of description, an example in which the channel measurement method is performed by the terminal device may be used for description.

The channel measurement method includes the following steps.

A terminal device obtains first downlink channel information through measurement. The terminal device obtains auxiliary information, where the auxiliary information includes uplink channel information and/or second downlink channel information obtained by the terminal device through measurement. The terminal device sends, to a network device, second information obtained based on the first downlink channel information and third information obtained based on the auxiliary information, where the second information and the third information are used to determine first information; or the terminal device sends first information to a network device, where the first information is used to determine third downlink channel information.

According to the channel measurement method provided in this embodiment of this application, in a process of reconstructing downlink channel information by the network device, in addition to the second information obtained based on the first downlink channel information obtained by the terminal device through measurement, information fed back by the terminal device to the network device further includes the third information obtained based on the auxiliary information. Alternatively, the first information fed back by the terminal device to the network device is information obtained based on the second information and the third information. Therefore, the third downlink channel information reconstructed by the network device based on the first information may be understood as that the network device integrates the first downlink channel information and the auxiliary information in the process of reconstructing the downlink channel information, so that precision of the reconstructed downlink channel information can be improved.

With reference to the second aspect, in some implementations of the second aspect, the first information includes a first compressed codeword, the second information includes a second compressed codeword, the third information includes a third compressed codeword, and the first compressed codeword is obtained based on the second compressed codeword and the third compressed codeword. The method further includes: The terminal device encodes the first downlink channel information based on a first encoder, to obtain the second compressed codeword. The terminal device encodes the auxiliary information based on a second encoder, to obtain the third compressed codeword, where the first encoder and the second encoder are encoders obtained through training.

In a possible implementation, the first information is the first compressed codeword, the second information is the second compressed codeword obtained by the first encoder by encoding the first downlink channel information, the third information is the third compressed codeword obtained by the second encoder by encoding the auxiliary information, and the first compressed codeword is the compressed codeword obtained by combining the second compressed codeword and the third compressed codeword.

Specifically, the first encoder and the second encoder are encoders obtained through training.

It should be understood that, in this embodiment of this application, that the first encoder and the second encoder are encoders obtained through training may be understood as that the first encoder and the second encoder are respectively AI networks obtained through training based on a large quantity of data sets, or the first encoder and the second encoder are respectively obtained through machine learning.

According to the channel measurement method provided in this embodiment of this application, the first encoder and the second encoder are deployed on the terminal device side.

With reference to the second aspect, in some implementations of the second aspect, that the terminal device sends the second information and the third information to the network device includes: The terminal device sends the second compressed codeword and the third compressed codeword to the network device, where the second compressed codeword and the third compressed codeword are combined to obtain the first compressed codeword.

Optionally, the terminal device may encode, based on the second encoder, the auxiliary information to obtain the third compressed codeword, and send both the second compressed codeword and the third compressed codeword to the network device, so that the network device combines the second compressed codeword and the third compressed codeword to obtain the first compressed codeword.

With reference to the second aspect, in some implementations of the second aspect, the method further includes: The terminal device combines the second compressed codeword and the third compressed codeword to obtain the first compressed codeword. That the terminal device sends the first information to the network device includes: The terminal device sends the first compressed codeword to the network device.

Optionally, the terminal device may encode the auxiliary information based on the second encoder to obtain the third compressed codeword, combine the second compressed codeword and the third compressed codeword to obtain the first compressed codeword, and send the first compressed codeword to the network device.

With reference to the second aspect, in some implementations of the second aspect, the first information includes a first compressed codeword, the second information includes the first downlink channel information, the third information includes the auxiliary information. The method further includes: The terminal device combines the first downlink channel information and the auxiliary information to obtain fourth information. The terminal device encodes the fourth information based on a third encoder, to obtain the first compressed codeword, where the third encoder is an encoder obtained through training. That the terminal device sends the first information to the network device includes: The terminal device sends the first compressed codeword to the network device.

In a possible implementation, the first information is the first compressed codeword, the second information is the first downlink channel information, the third information is the auxiliary information, and the first compressed codeword is the compressed codeword obtained by the third encoder by encoding the fourth information obtained by combining the first downlink channel information and the auxiliary information. Specifically, the third encoder is an encoder obtained through training.

In this implementation, the third encoder may be deployed on the terminal device side, so that the terminal device obtains the auxiliary information and the first downlink channel information, combines the auxiliary information and the first downlink channel information to obtain the fourth information, encodes the fourth information based on the third encoder to obtain the first compressed codeword, and sends the first compressed codeword to the network device.

With reference to the second aspect, in some implementations of the second aspect, the first information includes a first compressed codeword, the second information includes the first downlink channel information, the third information includes the auxiliary information. The method further includes: The terminal device encodes the first downlink channel information based on a first encoder, to obtain a second compressed codeword, where the first encoder is an encoder obtained through training. The terminal device combines the second compressed codeword and the auxiliary information to obtain the first compressed codeword. That the terminal device sends the first information to the network device includes: The terminal device sends the first compressed codeword to the network device.

In a possible implementation, the first information is the first compressed codeword, the second information is the first downlink channel information, the third information is the auxiliary information, and the first compressed codeword is the compressed codeword obtained by the terminal device by combining the auxiliary information and the second compressed codeword obtained by the first encoder by encoding the first downlink channel information. Specifically, the second encoder is an encoder obtained through training.

With reference to the second aspect, in some implementations of the second aspect, the second downlink channel information is prior downlink channel information obtained by the terminal device through measurement, and the third downlink channel information is downlink channel information reconstructed by the network device.

In this embodiment of this application, the second downlink channel information may be understood as the downlink channel prior information obtained by the terminal device through measurement, and the third downlink channel information may be understood as the downlink channel information reconstructed by the network device.

According to a third aspect, a channel measurement apparatus is provided. The channel measurement apparatus includes a processor, configured to implement a function of the network device in the method described in the first aspect.

Optionally, the channel measurement apparatus may further include a memory. The memory is coupled to the processor, and the processor is configured to implement the function of the network device in the method described in the first aspect.

In a possible design, the memory is configured to store program instructions and data. The memory is coupled to the processor. The processor may invoke and execute the program instructions stored in the memory, to implement the function of the network device in the method described in the first aspect. Optionally, the channel measurement apparatus may further include a communication interface. The communication interface is used by the channel measurement apparatus to communicate with another device. When the channel measurement apparatus is a network device, the communication interface is a transceiver, an input/output interface, a circuit, or the like.

In a possible design, the channel measurement apparatus includes the processor and the communication interface, configured to implement the function of the network device in the method described in the first aspect. Specifically, details are as follows.

The processor communicates with an external device through the communication interface.

The processor is configured to run a computer program, to enable the apparatus to implement any method described in the first aspect.

It may be understood that the external device may be an object other than the processor, or an object other than the apparatus.

In another possible design, the channel measurement apparatus is a chip or a chip system. The communication interface may be an input/output interface, an interface circuit, an output circuit, an input circuit, a pin, a related circuit, or the like in the chip or the chip system. The processor may alternatively be embodied as a processing circuit or a logic circuit.

According to a fourth aspect, a channel measurement apparatus is provided. The channel measurement apparatus includes a processor, configured to implement a function of the terminal device in the method described in the second aspect.

Optionally, the channel measurement apparatus may further include a memory. The memory is coupled to the processor, and the processor is configured to implement the function of the terminal device in the method described in the second aspect.

In a possible design, the memory is configured to store program instructions and data. The memory is coupled to the processor. The processor may invoke and execute the program instructions stored in the memory, to implement the function of the terminal device in the method described in the second aspect.

Optionally, the channel measurement apparatus may further include a communication interface. The communication interface is used by the channel measurement apparatus to communicate with another device. When the channel measurement apparatus is a terminal device, the transceiver may be a communication interface or an input/output interface.

In a possible design, the channel measurement apparatus includes the processor and the communication interface, configured to implement the function of the terminal device in the method described in the second aspect. Specifically, details are as follows.

The processor communicates with an external device through the communication interface.

The processor is configured to run a computer program, to enable the apparatus to implement any method described in the second aspect.

It may be understood that the external device may be an object other than the processor, or an object other than the apparatus.

In another implementation, when the channel measurement apparatus is a chip or a chip system, the communication interface may be an input/output interface, an interface circuit, an output circuit, an input circuit, a pin, a related circuit, or the like in the chip or the chip system. The processor may alternatively be embodied as a processing circuit or a logic circuit.

According to a fifth aspect, a computer-readable storage medium is provided. The computer-readable storage medium stores a computer program. When the computer program is executed by a communication apparatus, the communication apparatus is enabled to implement the method according to any one of the first aspect and the possible implementations of the first aspect.

According to a sixth aspect, a computer-readable storage medium is provided. The computer-readable storage medium stores a computer program. When the computer program is executed by a communication apparatus, the communication apparatus is enabled to implement the method according to any one of the second aspect and the possible implementations of the second aspect.

According to a seventh aspect, a computer program product including instructions is provided. When the instructions are executed by a computer, a communication apparatus is enabled to implement the method according to any one of the first aspect and the possible implementations of the first aspect.

According to an eighth aspect, a computer program product including instructions is provided. When the instructions are executed by a computer, a communication apparatus is enabled to implement the method according to any one of the second aspect and the possible implementations of the second aspect.

According to a ninth aspect, a communication system is provided. The communication system includes the channel measurement apparatus shown in the third aspect and the channel measurement apparatus shown in the fourth aspect.

### BRIEF DESCRIPTION OF DRAWINGS

FIG. 1 is a schematic diagram of a system 100 to which a channel measurement method according to an embodiment of this application can be applied;
FIG. 2 is a schematic flowchart of CSI feedback performed based on an existing CSI feedback process;
FIG. 3 is a schematic flowchart of an AI-based CSI feedback according to an embodiment of this application;
FIG. 4A to FIG. 4D are a schematic flowchart of a channel measurement method according to an embodiment of this application;
FIG. 5(a) to FIG. 5(c) are each a framework diagram for obtaining first information according to an embodiment of this application;
FIG. 6(a) and FIG. 6(b) are each another framework diagram for obtaining first information according to an embodiment of this application;
FIG. 7 is still another framework diagram for obtaining first information according to an embodiment of this application;
FIG. 8 is yet another framework diagram for obtaining first information according to an embodiment of this application;
FIG. 9 is a schematic diagram for obtaining third downlink channel information according to an embodiment of this application;
FIG. 10 is another schematic diagram for obtaining third downlink channel information according to an embodiment of this application;
FIG. 11 is a schematic diagram of a third decoder according to an embodiment of this application;
FIG. 12 is a schematic diagram of an encoder and a decoder according to an embodiment of this application;
FIG. 13 is a schematic diagram of a channel measurement apparatus 1300 according to an embodiment of this application;
FIG. 14 is a schematic diagram of a structure of a terminal device 1400 used in an embodiment of this application;
FIG. 15 is a schematic diagram of a channel measurement apparatus 1500 according to an embodiment of this application; and
FIG. 16 is a schematic diagram of a structure of a network device 1600 used in an embodiment of this application.

### DESCRIPTION OF EMBODIMENTS

The following describes technical solutions of this application with reference to the accompanying drawings.

The technical solutions in embodiments of this application may be applied to various communication systems, such as a long term evolution (long term evolution, LTE) system, an LTE frequency division duplex (frequency division duplex, FDD) system, an LTE time division duplex (time division duplex, TDD) system, a worldwide interoperability for microwave access (worldwide interoperability for microwave access, WiMAX) system, a 5th generation (5th generation, 5G) system, a new radio (new radio, NR) system, or a future network. The 5G mobile communication system in this application includes a non-standalone (non-standalone, NSA) 5G mobile communication system or a standalone (standalone, SA) 5G mobile communication system. The technical solutions provided in this application are further applicable to a future communication system, for example, a 6th generation mobile communication system. Alternatively, the communication system may be a public land mobile network (public land mobile network, PLMN), a device-to-device (device-to-device, D2D) communication system, a machine to machine (machine-to-machine, M2M) communication system, an internet of things (internet of Things, IoT) communication system, or another communication system.

A terminal device (terminal equipment) in embodiments of this application may be an access terminal, a subscriber unit, a subscriber station, a mobile station, a relay station, a remote station, a remote terminal, a mobile device, a user terminal (user terminal), user equipment (user equipment, UE), a terminal (terminal), a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved public land mobile network (public land mobile network, PLMN), a terminal device in a future internet of vehicles, or the like. This is not limited in embodiments of this application.

As an example rather than a limitation, in embodiments of this application, the wearable device may also be referred to as a wearable intelligent device, and is a generic term for wearable devices such as glasses, gloves, watches, clothes, and shoes that are developed based on intelligent design of daily wearing by using wearable technologies. The wearable device is a portable device that can be directly worn by a user or integrated into clothes or an accessory of the user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that focus on only one type of application function and need to work with other devices such as smartphones, such as various smart bands or smart jewelry for monitoring physical signs.

In addition, the terminal device in embodiments of this application may alternatively be a terminal device in an IoT system. IoT is an important part of future development of information technologies. A main technical feature of the IoT is connecting a thing to a network by using a communication technology, to implement an intelligent network for interconnection between a person and a machine or between things. In embodiments of this application, an IoT technology may implement massive connections, deep coverage, and terminal power saving by using, for example, a narrow band (narrow band, NB) technology.

In addition, in this embodiment of this application, the terminal device may further include a sensor, for example, an intelligent printer, a train detector, or a gas station. Main functions of the terminal device include collecting data (by some terminal devices), receiving control information and downlink data from a network device, sending an electromagnetic wave, and transmitting uplink data to the network device.

The network device in embodiments of this application may be any communication device that has a wireless transceiver function and that is configured to communicate with the terminal device. The device includes but is not limited to an evolved NodeB (evolved NodeB, eNB), a radio network controller (Radio Network Controller, RNC), a NodeB (NodeB, NB), a home base station (home evolved NodeB, HeNB, or home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the device may be a gNB or a transmission point (TRP or TP) in a 5G system (for example, an NR system), one antenna panel or a group of antenna panels (including a plurality of antenna panels) of a base station in the 5G system, or a network node, for example, a baseband unit (BBU) or a distributed unit (distributed unit, DU), that constitutes the gNB or the transmission point.

In some deployments, the network device in embodiments of this application may be a central unit (central unit, CU) or a distributed unit (distributed unit, DU), or the network device includes the CU and the DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some processing functions of the physical layer, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

Further, the CU may be divided into a control plane central unit (CU-CP) and a user plane central unit (CU-UP). The CU-CP and the CU-UP may also be deployed on different physical devices. The CU-CP is responsible for a control plane function, and mainly includes the RRC layer and a PDCP-C layer. The PDCP-C layer is mainly responsible for data encryption and decryption, integrity protection, data transmission, and the like on a control plane. The CU-UP is responsible for a user plane function, and mainly includes an SDAP layer and a PDCP-U layer. The SDAP layer is mainly responsible for processing data of a core network and mapping a flow (flow) to a bearer. The PDCP-U layer is mainly responsible for at least one function of encryption and decryption, integrity protection, header compression, serial number maintenance, data transmission, and the like on a data plane. Specifically, the CU-CP and the CU-UP are connected through a communication interface (for example, an E1 interface). The CU-CP represents that the network device is connected to a core network device through a communication interface (for example, an Ng interface), and is connected to the DU through a communication interface (for example, an F1-C (control plane) interface). The CU-UP is connected to the DU through a communication interface (for example, an F1-U (user plane) interface).

In another possible implementation, the PDCP-C layer is also included in the CU-UP.

It may be understood that the foregoing protocol layer division between the CU and the DU, and protocol layer division between the CU-CP and the CU-UP are merely examples, and there may be another division manner. This is not limited in embodiments of this application.

The network device mentioned in embodiments of this application may be a device including a CU or a DU, a device including the CU and the DU, or a device including a control plane CU node (a CU-CP node), a user plane CU node (a CU-UP node), and a DU node.

The network device and the terminal device may be deployed on land, including indoor or outdoor and handheld or vehicle-mounted devices, or may be deployed on the water, or may be deployed on an airplane, a balloon, or a satellite in the air. Scenarios in which the network device and the terminal device are located are not limited in embodiment of this application.

In embodiments of this application, the terminal device or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more computer operating systems that implement service processing through a process (process), for example, a Linux operating system, a Unix operating system, an Android operating system, an iOS operating system, or a Windows operating system. The application layer includes applications such as a browser, a contact list, word processing software, and instant messaging software.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, a computer-readable medium may include but is not limited to a magnetic storage component (for example, a hard disk drive, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable storage media" may include but is not limited to a radio channel, and various other media that can store, include, and/or carry instructions and/or data.

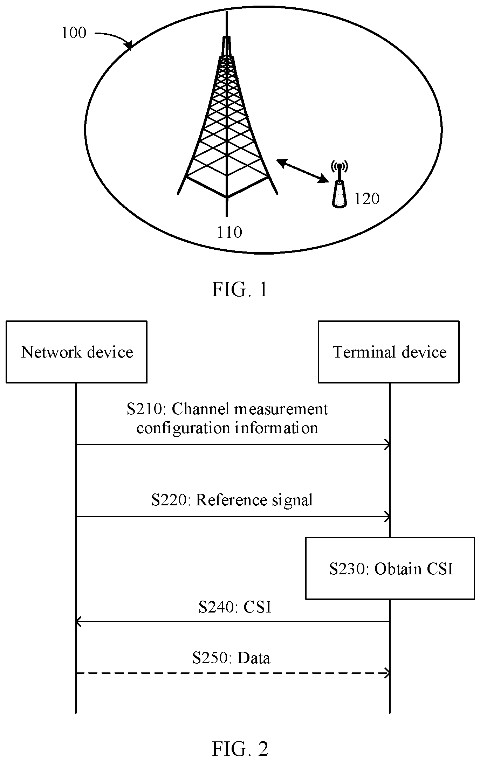

For ease of understanding of embodiments of this application, the communication system shown in FIG. 1 is first used as an example to describe in detail a communication system to which embodiments of this application are applicable. FIG. 1 is a schematic diagram of a communication system 100 to which a channel measurement method according to an embodiment of this application is applicable. As shown in FIG. 1, the communication system 100 may include at least one network device, for example, a network device 110 shown in FIG. 1. The communication system 100 may further include at least one terminal device, for example, a terminal device 120 shown in FIG. 1. The network device 110 may communicate with the terminal device 120 over a radio link. A plurality of antennas may be configured for each communication device such as the network device 110 or the terminal device 120. For each communication device in the communication system 100, the configured plurality of antennas may include at least one transmit antenna configured to send a signal and at least one receive antenna configured to receive a signal. Therefore, the communication devices in the communication system 100, for example, the network device 110 and the terminal device 120, may communicate with each other by using a multi-antenna technology.

It should be understood that FIG. 1 is only a simplified schematic diagram of an example for ease of understanding. The communication system 100 may further include another network device or another terminal device, which is not shown in FIG. 1.

For ease of understanding embodiments of this application, several basic concepts in embodiments of this application are briefly described. It should be understood that basic concepts described below are briefly described by using a basic concept specified in an NR protocol as an example, but embodiments of this application are not limited to being applied only to an NR system. Therefore, standard names appearing when the NR system is used as an example for description are all functional descriptions, and specific names are not limited, indicate only functions of a device, and may be correspondingly extended to another system, for example, a 2G, 3G, 4G, or future communication system.

### 1. Precoding technology

When a channel status is known, the network device may process a to-be-sent signal by using a precoding matrix that matches with the channel status, so that a precoded to-be-sent signal adapts to a channel. In this way, a receive device can suppress impact between signals of a plurality of receive devices, and maximize a signal to interference plus noise ratio of a received signal. Therefore, after the to-be-sent signal is precoded, received signal quality (for example, the signal to interference plus noise ratio (signal to interference plus noise ratio, SINR)) is improved. Therefore, transmission between a transmit device and the plurality of receive devices can be performed on a same time-frequency resource by using the precoding technology, that is, MU-MIMO is implemented.

It should be understood that related descriptions of the precoding technology in this application are merely examples for ease of understanding, and are not intended to limit the protection scope of embodiments of this application. In a specific implementation process, the transmit device may perform precoding in another manner. For example, when channel information (for example, but not limited to, a channel matrix) cannot be obtained, precoding is performed by using a preset precoding matrix or in a weighting processing manner. For brevity, specific content of the precoding technology is not described in this application.

### 2. Precoding matrix indicator (precoding matrix indicator, PMI)

The PMI may be used to indicate a precoding matrix. The precoding matrix may be, for example, a precoding matrix determined by the terminal device based on a channel matrix for each frequency domain unit. The precoding matrix may be determined by the terminal device through channel estimation or the like or based on channel reciprocity. However, it should be understood that a specific method for determining the precoding matrix by the terminal device is not limited to the foregoing descriptions. For a specific implementation, refer to an existing technology. For brevity, details are not listed one by one herein.

For example, the precoding matrix may be obtained by performing singular value decomposition (singular value decomposition, SVD) on a channel matrix or a covariance matrix of the channel matrix, or may be obtained by performing eigenvalue decomposition (eigenvalue decomposition, EVD) on the covariance matrix of the channel matrix. It should be understood that the foregoing listed manner of determining the precoding matrix is merely an example, and should not constitute any limitation on this application. For a manner of determining the precoding matrix, refer to the existing technology. For brevity, details are not listed one by one herein.

The precoding matrix determined by the terminal device may be referred to as a to-be-fed-back precoding matrix or a to-be-reported precoding matrix. The terminal device may indicate the to-be-fed-back precoding matrix by using the PMI, so that the network device restores the precoding matrix based on the PMI. The precoding matrix restored by the network device based on the PMI may be the same as or similar to the to-be-fed-back precoding matrix.

In downlink channel measurement, higher approximation between the precoding matrix determined by the network device based on the PMI and the precoding matrix determined by the terminal device indicates that the precoding matrix determined by the network device for data transmission is more adaptable to a downlink channel. In this way, signal transmission quality can be improved.

It should be understood that the PMI is merely a name, and should not constitute any limitation on this application. This application does not exclude a possibility of defining other signaling in a future protocol to implement a same or similar function.

It should be noted that, according to a method provided in embodiments of this application, the network device may determine, based on a feedback of the terminal device, a precoding matrix corresponding to one or more frequency domain units. The precoding matrix determined by the network device may be directly used for downlink data transmission. Some beamforming methods, including, for example, zero forcing (zero forcing, ZF), regularized zero-forcing (regularized zero-forcing, RZF), minimum mean-squared error (minimum mean-squared error, MMSE), and maximizing a signal-to-leakage-and-noise ratio (signal-to-leakage-and-noise, SLNR), may also be used, to obtain a precoding matrix finally used for downlink data transmission. This is not limited in this application. Unless otherwise specified, all precoding matrices mentioned below may be determined according to the method provided in this application.

### 3. Channel reciprocity

In a time division duplex (time division duplexing, TDD) mode, on uplink and downlink channels, signals are transmitted on a same frequency domain resource and different time domain resources. Within a short period of time (for example, coherence time of channel propagation), it may be considered that channels through which signals on the uplink and downlink channels pass are the same, and the uplink and downlink channels may be obtained equivalently. This is reciprocity between the uplink and downlink channels. Based on the reciprocity between the uplink and downlink channels, the network device may measure the uplink channel based on an uplink reference signal, for example, a sounding reference signal (sounding reference signal, SRS). In addition, the downlink channel may be estimated based on the uplink channel, so that a precoding matrix used for downlink transmission can be determined.

However, in a frequency division duplex (frequency division duplexing, FDD) mode, because a frequency band interval between the uplink and downlink channels is far greater than a coherence bandwidth, and the uplink and downlink channels do not have complete reciprocity, the precoding matrix that is used for downlink transmission and that is determined by using the uplink channel may not adapt to the downlink channel. In an FDD system, a network device may perform downlink precoding based on channel state information (channel state information, CSI) fed back by a terminal device to the network device. Specifically, a basic flowchart in which the network device and the terminal device perform CSI feedback is shown in FIG. 2. FIG. 2 is a schematic flowchart of performing CSI feedback based on an existing CSI feedback process.

As shown in FIG. 2, the CSI feedback process includes S210: The network device sends channel measurement configuration information to the terminal device. The channel measurement configuration information notifies the terminal device to perform channel measurement (which may further include time for performing channel measurement). After sending the channel measurement configuration information, the network device further needs to send reference information used for channel measurement to the terminal device. That is, the method process shown in FIG. 2 further includes S220: The network device sends a reference signal to the terminal device. After receiving the reference signal, the terminal device can perform channel measurement based on the reference signal, to obtain final CSI feedback content through calculation. That is, the method process shown in FIG. 2 further includes S230: The terminal device obtains CSI. Specifically, the terminal device needs to feed back the obtained CSI to the network device. In this case, the method process shown in FIG. 2 further includes S240: The terminal device feeds back the CSI to the network device.

Further, after learning of the CSI, the network device can send data to the terminal device based on the CSI. Optionally, the method process shown in FIG. 2 further includes S250: The network device sends the data to the terminal device.

Specifically, the network device determines, based on a channel rank indicator (rank indicator, RI) fed back by the terminal device, a quantity of flows for transmitting the data to the terminal device. The network device determines, based on a channel quality indicator (channel quality indicator, CQI) fed back by the terminal device, a modulation order and a channel coding bit rate for transmitting the data to the terminal device. The network device determines, based on a precoding matrix indicator (precoding matrix indicator, PMI) fed back by the terminal device, precoding for transmitting the data to the terminal device.

### 4. Reference signal (reference signal, RS)

The RS may also be referred to as a pilot (pilot), a reference sequence, or the like. In embodiments of this application, the reference signal may be a reference signal used for channel measurement. For example, the reference signal may be a channel state information reference signal (channel state information reference signal, CSI-RS) used for downlink channel measurement, or may be a sounding reference signal (sounding reference signal, SRS) used for uplink channel measurement. It should be understood that the reference signals listed above are merely examples, and this should not constitute any limitation on this application. This application does not exclude a possibility that another reference signal is defined in a future protocol to implement a same or similar function.

### 5. Compressed codeword

The compressed codeword in embodiments of this application is information obtained by an encoder by compressing channel information or auxiliary CSI information, and is referred to as a compressed codeword. In addition, in embodiments of this application, information input to a decoder may also be referred to as a compressed codeword. The following describes the compressed codeword in this application in detail with reference to the accompanying drawings. Details are not described herein.

It should be understood that in this application, information output by the encoder and/or the input information of the decoder are/is merely referred to as a compressed codeword. This does not constitute any limitation on the protection scope of this application. For example, the information output by the encoder and/or the input information of the decoder may also be referred to as a codeword, compression information, or a complex coefficient. Examples are not described one by one herein.

Further, a dimension of the compressed codeword is used in embodiments of this application. Specifically, the dimension of the compressed codeword in this application is a dimension (for example, a quantity of complex numbers) of the information obtained by the encoder by compressing the channel information or the auxiliary CSI information, or a dimension of the information input to the decoder. For example, a dimension of downlink channel information obtained by the terminal device through measurement is 32. After the 32-dimensional downlink channel information is input to a first encoder, the first encoder encodes the information and outputs a second compressed codeword, where a dimension of the second compressed codeword may be 16. For another example, after the 16-dimensional second compressed codeword is input to a second decoder, a dimension of information decoded and output by the second decoder is 32.

It should be understood that the dimension of the compressed codeword may also be referred to as a size of the compressed codeword. This is not limited in this application.

### 6. Channel sparsity

In a massive MIMO system, first, because a limited quantity of angles, a multipath delay, a Doppler shift, relatively centralized angle spread, delay spread, and Doppler spread exist in signal propagation space, energy of channels of the massive MIMO system is concentrated on several main paths, energy on other paths is very small and can be ignored, and the channels may be considered to be sparse. In space domain, it can be learned that channel energy is concentrated at some angles when a space domain channel is converted to an angle domain. In frequency domain, it can be learned that channel energy is concentrated in some multipath delays when a frequency domain channel is converted to a delay domain. In time domain, it can be learned that channel energy is concentrated in some Doppler shifts when the time domain channel is converted to a Doppler domain.

### 7. Auxiliary CSI information

It may be learned from the foregoing descriptions of reciprocity that the uplink and downlink channels do not have complete reciprocity in the FDD mode. However, in the FDD mode, the uplink and downlink channels still have partial reciprocity, for example, angle reciprocity and delay reciprocity. Therefore, an angle and a delay may also be referred to as reciprocity parameters.

When a signal is transmitted through a radio channel, the signal may arrive at a receive antenna through a plurality of paths from a transmit antenna. A multipath delay results in frequency selective fading, namely, a change on a frequency domain channel. The delay is transmission time of a radio signal on different transmission paths, is determined by a distance and a speed, and is irrelevant to a frequency domain of the radio signal. When a signal is transmitted on different transmission paths, there are different transmission delays due to different distances. Therefore, delays on the uplink and downlink channels in the FDD mode may be considered to be the same, in other words, reciprocal.

In addition, the angle may be an angle of arrival (angle of arrival, AOA) at which a signal arrives at the receive antenna through a radio channel, or may be an angle of departure (angle of departure, AOD) at which a signal is transmitted by using the transmit antenna. In embodiments of this application, the angle may be an angle of arrival at which an uplink signal arrives at the network device, or may be an angle of departure at which the network device transmits a downlink signal. The angle of arrival of the uplink reference signal and the angle of departure of the downlink reference signal may be considered to be the same, in other words, reciprocal.

The uplink and downlink channels in the FDD mode have partial reciprocity. To be specific, in the FDD mode, the network device may obtain, by using uplink channel information, a channel property having reciprocity. In this application, the uplink channel information in the FDD mode may be referred to as auxiliary CSI information.

In addition, there is a hybrid CSI feedback manner. To reduce feedback overheads, a to-be-obtained PMI may be decomposed into a product of a wideband PMI and a subband PMI. The wideband PMI is measured and updated in a long periodicity, and the subband PMI is updated in a short periodicity. In LTE R14, two typical modes are defined for the hybrid CSI feedback: (1) A Class A codebook is configured for a long- periodicity wideband for feedback, and a Class B K=1 codebook is configured for a short- periodicity narrowband for feedback. (2) A Class B K>1 codebook is configured for the long- periodicity wideband for feedback, and a Class B K=1 codebook is configured for the short- periodicity narrowband. In this application, the downlink channel information for long-term wideband measurement may be referred to as auxiliary CSI information.

### 8. Artificial intelligence (artificial intelligence, AI)

Artificial intelligence is sweeping the world. Many words, such as artificial intelligence, machine learning, and deep learning, are lingering around us. This application relates to the deep learning in the AI. The deep learning is a learning process in which a deep neural network is used to represent a feature. A neural network usually includes two phases: training and testing. The training is a process of extracting model parameters from training data by using a neural network model. The testing is to run test data by using a trained model (neural network model + model parameter) and view a result. A usable framework obtained by uniformly abstracting phase data in a training process is referred to as a training framework. This application mainly relates to a design of a training framework in a CSI feedback process.

### 9. Encoder and decoder

Currently, in CSI feedback research in a massive MIMO system, to-be-fed-back CSI may be compressed by using sparsity of the foregoing channel in time, frequency, and space domains, and the compressed CSI is transmitted to the network device end through a feedback link. The network device end reconstructs an original sparse channel matrix based on a feedback value. The CSI feedback method is based on an architecture of an automatic encoder and a decoder. Coding is performed on the terminal device end, and decoding and reconstruction are performed on the network device end.

It should be understood that a dimension of information input to the encoder is inconsistent with a dimension of information output after the information is encoded by the encoder. It may be understood that the encoder compresses the information. In embodiments of this application, a dimension ratio of output information of the encoder to input information of the encoder is referred to as a compression rate of the encoder, a compression percentage of the encoder, compression efficiency of the encoder, or the like. For example, the input information of the encoder is 4-bit information, and the output information of the encoder is 2-bit information. In this case, the compression rate of the encoder is 2/4=1/2.

It should be further understood that a dimension of information input to the decoder is inconsistent with a dimension of information output by the decoder after the information is decoded by the decoder. It may be understood that the encoder compresses the information. In embodiments of this application, a dimension ratio of input information of the decoder to output information of the decoder is referred to as a decompression rate of the decoder, a decompression percentage of the decoder, decompression efficiency of the decoder, or the like. For example, the input information of the decoder is 2-bit information, and the output information of the decoder is 4-bit information. In this case, the compression rate of the decoder is 2/4=1/2.

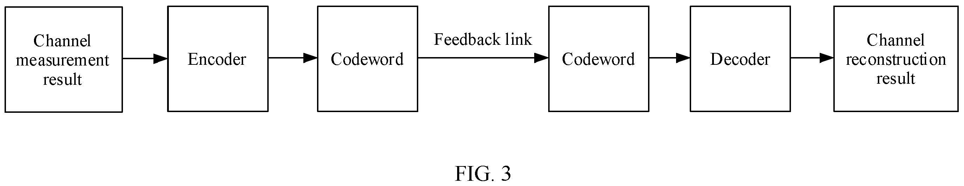

Specifically, FIG. 3 is a schematic flowchart of an AI-based CSI feedback according to an embodiment of this application. A network device and a terminal device perform joint training, to obtain an encoder and a decoder through training. The encoder is deployed in the terminal device, and the decoder is deployed in the network device. The terminal device measures a downlink reference signal to obtain downlink channel information. The downlink channel information is encoded by the encoder to obtain compressed codeword information that needs to be fed back to an air interface, and the compressed codeword information is fed back to the network device through a feedback link. After receiving the compressed codeword information, the network device performs decoding by using the locally deployed decoder to obtain reconstructed information of the channel information fed back by the terminal device. In the AI-based CSI feedback method, the terminal device needs to compress and feed back all channel information, and has a large amount of feedback content.

It should be understood that, in the AI-based CSI feedback method shown in FIG. 3, because a dimension of a compressed codeword output by the encoder is consistent with a dimension of a compressed codeword input to the decoder, a compression rate of the encoder should be consistent with a decompression rate of the decoder.

In addition, to facilitate understanding of embodiments of this application, the following several descriptions are provided.

First, in this application, "used to indicate" may include "used to directly indicate" and "used to indirectly indicate". When a piece of indication information is described as indicating A, the indication information may directly indicate A or indirectly indicate A, but it does not necessarily indicate that the indication information includes A.

Information indicated by the indication information is referred to as to-be-indicated information. In a specific implementation process, there are a plurality of manners of indicating the to-be-indicated information. For example, but not limited to, the to-be-indicated information may be directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is already known or pre-agreed on. For example, specific information may alternatively be indicated by using an arrangement sequence of a plurality of pieces of information that is pre-agreed on (for example, specified in a protocol), to reduce indication overheads to some extent. In addition, a common part of all pieces of information may be further identified and indicated in a unified manner, to reduce indication overheads caused by separately indicating same information. For example, a person skilled in the art should understand that a precoding matrix includes precoding vectors, and the precoding vectors in the precoding matrix may have a same part in terms of composition or another attribute.

In addition, a specific indication manner may alternatively be various existing indication manners, for example, but not limited to, the foregoing indication manners and various combinations thereof. For details of the various indication manners, refer to the existing technology. Details are not described in this specification. It can be learned from the foregoing descriptions that, for example, when a plurality of pieces of information of a same type need to be indicated, different indication information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of the to-be-indicated information.

In addition, the to-be-indicated information may have another equivalent form. For example, a row vector may be represented as a column vector; a matrix may be represented by using a transposed matrix of the matrix; the matrix may alternatively be represented in a form of a vector or an array; and the vector or the array may be formed by connecting row vectors or column vectors in the matrix. The technical solutions provided in embodiments of this application should be understood as covering various forms. For example, some or all features in embodiments of this application should be understood as covering various representations of the features.

The to-be-indicated information may be sent as a whole, or may be divided into a plurality of pieces of sub-information for separate sending. In addition, sending periodicities and/or sending occasions of the sub-information may be the same or may be different. A specific sending method is not limited in this application. The sending periodicities and/or the sending occasions of the sub-information may be predefined, for example, predefined according to a protocol, or may be configured by a transmit end device by sending configuration information to a receive end device. The configuration information may include, for example, but not limited to, one or a combination of at least two of radio resource control signaling, media access control (media access control, MAC) layer signaling, and physical layer signaling. The radio resource control signaling includes, for example, radio resource control (radio resource control, RRC) signaling. The MAC layer signaling includes, for example, a MAC control element (control element, CE). The physical layer signaling includes, for example, downlink control information (downlink control information, DCI).

Second, "first", "second", and various numerical numbers (for example, "#1", and "#2") in this application are merely used to distinguish between objects for ease of description, but are not intended to limit the scope of embodiments of this application. For example, the terms are used to distinguish between different encoders.

Third, in this application, "preset" may include: being indicated by the network device by using signaling, or predefined, for example, defined in a protocol. Herein, "predefined" may be implemented in a manner in which corresponding code, a table, or other related indication information is pre-stored in a device (for example, including the terminal device and the network device). A specific implementation thereof is not limited in this application.

Fourth, "storage" in embodiments of this application may be storage in one or more memories. The one or more memories may be separately disposed, or may be integrated into an encoder, a decoder, a processor, or a communication apparatus. Alternatively, some of the one or more memories may be separately disposed, and some of the one or more memories are integrated into a decoder, a processor, or a communication apparatus. A type of the memory may be a storage medium in any form, and is not limited in this application.

Fifth, a "protocol" in embodiments of this application may be a standard protocol in the communication field, for example, may include an LTE protocol, an NR protocol, and a related protocol applied to a future communication system. This is not limited in this application.

With reference to FIG. 1, the foregoing briefly describes a scenario to which the channel measurement method provided in embodiments of this application can be applied, and describes basic concepts that may be used in embodiments of this application. With reference to the accompanying drawings, the following describes in detail the channel measurement method provided in embodiments of this application.

It should be understood that the channel measurement method provided in embodiments of this application may be applied to a system in which communication is performed by using a multi-antenna technology, for example, the communication system 100 shown in FIG. 1. The communication system may include at least one network device and at least one terminal device. The network device and the terminal device may communicate with each other by using the multi-antenna technology.

It should be further understood that, a specific structure of an entity for performing the method provided in embodiments of this application is not particularly limited in the following embodiments, provided that the entity can run a program that records code of the method provided in embodiments of this application to perform communication according to the method provided in embodiments of this application. For example, the entity for performing the method provided in embodiments of this application may be the terminal device, the network device, or a functional module that is in the terminal device or the network device and that can invoke and execute the program.

Without loss of generality, interaction between the network device and the terminal device is used as an example below to describe in detail the channel measurement method provided in embodiments of this application.

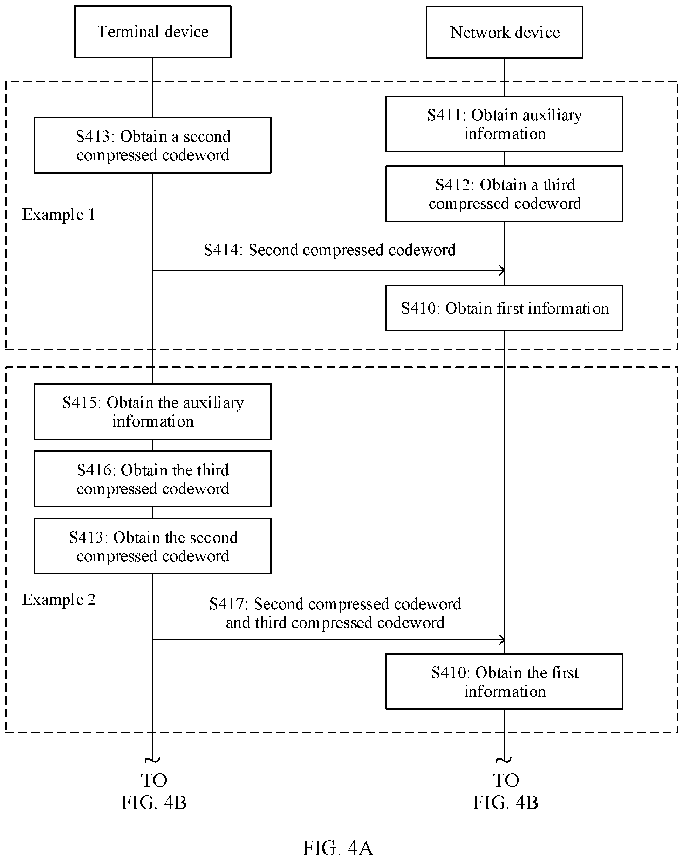

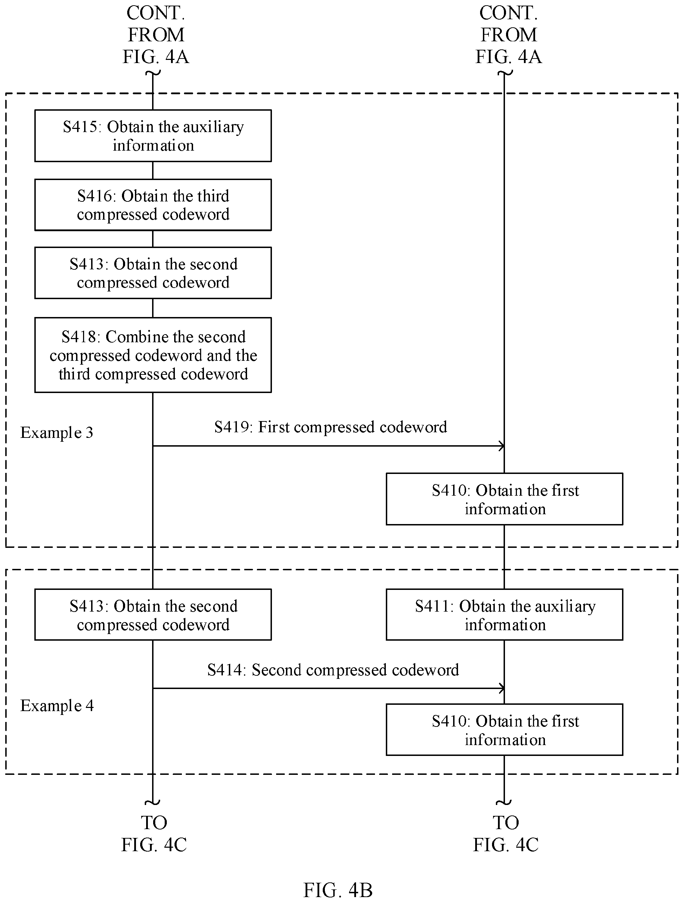

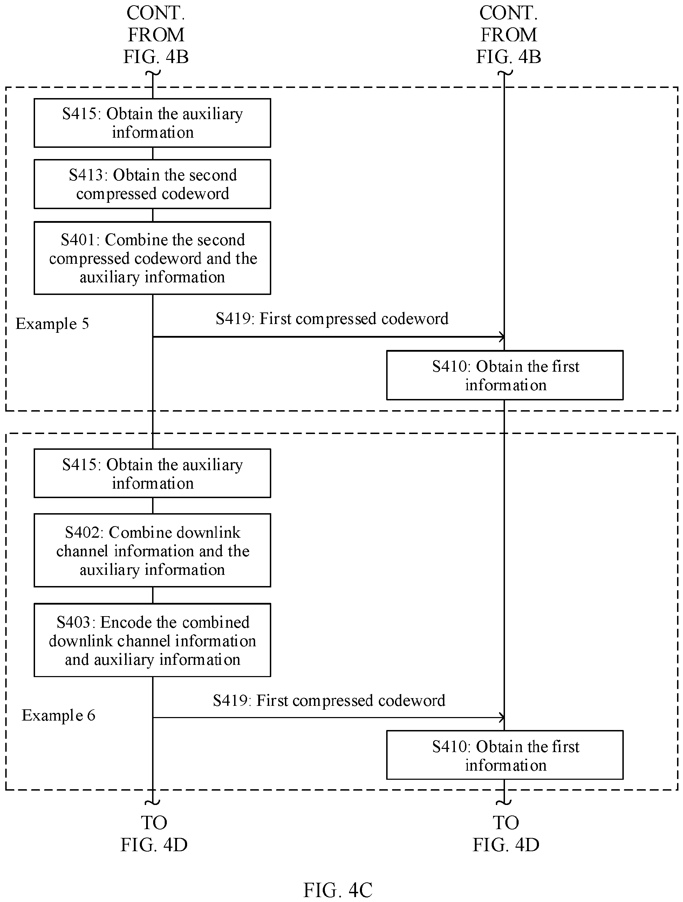

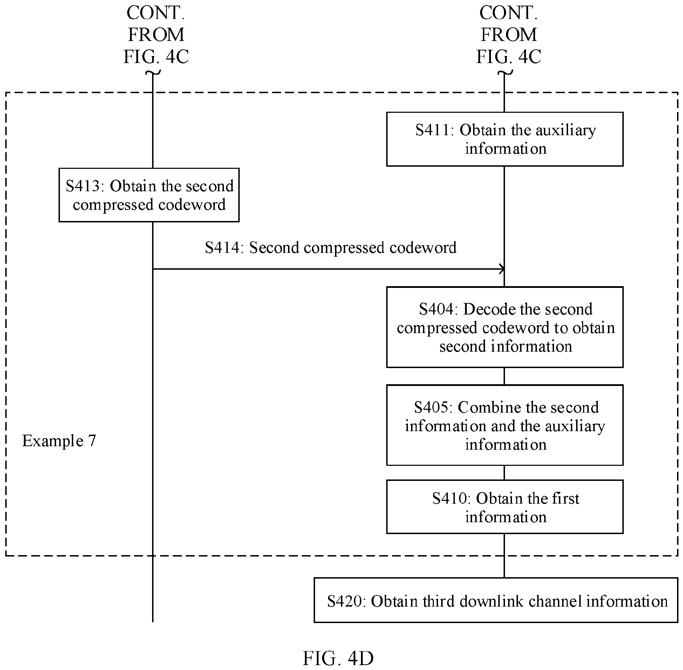

FIG. 4A to FIG. 4D are a schematic flowchart of a channel measurement method according to an embodiment of this application. In the channel measurement method provided in this embodiment of this application, auxiliary CSI information is used based on the AI-based CSI feedback method shown in FIG. 3, so that precision of channel reconstruction information obtained by a network device can be improved.

The channel measurement method includes some or all of the following steps.

S410: The network device obtains first information.

The first information is information obtained based on second information and third information, the second information is obtained based on first downlink channel information obtained by a terminal device through measurement, and the third information is obtained based on auxiliary information.

It may be understood that compared with a framework shown in FIG. 3, in an AI-based CSI feedback framework provided in this embodiment of this application, the auxiliary information is used, and to improve precision of channel reconstruction information obtained by the network device by using the auxiliary information, the AI-based CSI feedback framework provided in this application includes a combination module. The combination module is configured to combine the second information and the third information. How to specifically implement combination is described in detail below, and details are not described herein.

Specifically, the auxiliary information in the embodiment shown in FIG. 4A to FIG. 4D may be understood as the foregoing auxiliary CSI information, including uplink channel information obtained by the terminal device through measurement and/or second downlink channel information obtained by the terminal device through measurement. A difference between the second downlink channel information obtained by the terminal device through measurement and the first downlink channel information obtained by the terminal device through measurement lies in that: The second downlink channel information obtained by the terminal device through measurement is downlink channel prior information (for example, some known downlink channel information), and the first downlink channel information obtained by the terminal device through measurement is downlink channel information currently obtained by the terminal device through measurement.

In a possible implementation, the auxiliary information is uplink channel information in an FDD mode.

In another possible implementation, the auxiliary information is second downlink channel information for long-term wideband measurement.

In still another possible implementation, the auxiliary information is other information that can be used for channel reconstruction.

A specific form of the auxiliary information is not limited in this embodiment of this application. The auxiliary information may be any prior information that can be used for channel reconstruction, may be information specified in an existing protocol, or may be prior information that can assist in channel reconstruction in future development of communication technologies. Examples are not listed one by one for description.

The first downlink channel information includes first downlink channel state information (CSI). The first downlink channel information obtained by the terminal device through measurement is channel observation information obtained by the terminal device based on a pilot delivered by the network device. Specifically, the channel observation information may be unprocessed full channel state information of a channel; the channel observation information may be channel information processed by the terminal device (for example, an eigenvector matrix obtained by the terminal device by estimating a channel rank); the channel observation information may include channel observation information corresponding to one or more terminal devices; the channel observation information may be channel observation information of one or more antennas; or the channel observation information may be channel observation information of one or more flows. Possible representation forms of the first information obtained by the network device are described below by using examples.

### Example 1

The first information obtained by the network device is a first compressed codeword, the second information is a second compressed codeword, and the third information is a third compressed codeword. In this case, the first compressed codeword is obtained by combining the second compressed codeword and the third compressed codeword. In Example 1, the combination module may be understood as a compressed codeword combination module.

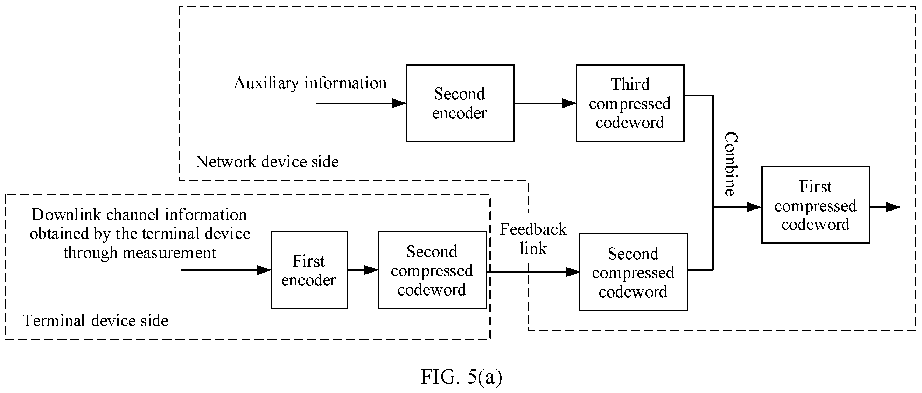

FIG. 5(a) to FIG. 5(c) are each a framework diagram for obtaining the first information according to an embodiment of this application. It can be learned from FIG. 5(a) that, the second compressed codeword is a compressed codeword obtained by a first encoder by encoding the first downlink channel information obtained by the terminal device through measurement, and the third compressed codeword is a compressed codeword obtained by a second encoder by encoding the auxiliary information.

It should be understood that, the first encoder and the second encoder in FIG. 5(a) are encoders obtained through training, the first encoder and the second encoder are AI networks obtained through training based on a large quantity of data sets, or the first encoder and the second encoder are encoders obtained through machine learning.

As shown in FIG. 5(a), the first encoder is deployed in the terminal device, the second encoder is deployed in the network device, and the compressed codeword combination module is deployed in the network device. To be specific, before the network device obtains the first information, the method process shown in FIG. 4A to FIG. 4D in Example 1 further includes the following steps. S411: The network device obtains the auxiliary information. S412: The network device obtains the third compressed codeword. S413: The terminal device obtains the second compressed codeword. S414: The terminal device sends the second compressed codeword to the network device. That the terminal device sends the second compressed codeword to the network device in S414 may be understood as that the terminal device sends the second compressed codeword to the network device through a feedback link (or referred to as an air interface) between the terminal device and the network device.

It can be learned from FIG. 5(a) that when the first encoder is deployed in the terminal device, that the terminal device obtains the second compressed codeword includes: The terminal device encodes, by using the first encoder, the first downlink channel information obtained through measurement, to obtain the second compressed codeword. Further, after obtaining the second compressed codeword, the terminal device sends the second compressed codeword to the network device through the feedback link, so that the network device obtains the to-be-combined second compressed codeword.

When the second encoder is deployed in the network device, the network device obtains the third compressed codeword. Specifically, as shown in FIG. 5(a), the network device first obtains the auxiliary information, and encodes the auxiliary information based on the second encoder to obtain the third compressed codeword. The network device obtains the to-be-combined third compressed codeword.

It should be understood that, in this embodiment of this application, how the network device obtains the auxiliary information is not limited. The auxiliary information may be obtained from the terminal device. That is, the terminal device feeds back the auxiliary information to the network device. A feedback configuration for feeding back the auxiliary information by the terminal device to the network device may be the same as or different from a feedback configuration for feeding back the second compressed codeword by the terminal device to the network device. Alternatively, the network device may locally store the auxiliary information.

It can be learned from FIG. 5(a) that in Example 1, the network device combines the second compressed codeword received through the feedback link and the third compressed codeword obtained by the network device, to obtain the first compressed codeword.

### Example 2

The first information obtained by the network device is a first compressed codeword, the second information is a second compressed codeword, and the third information is a third compressed codeword. In this case, the first compressed codeword is obtained by combining the second compressed codeword and the third compressed codeword. In Example 2, the combination module may also be understood as a compressed codeword combination module.

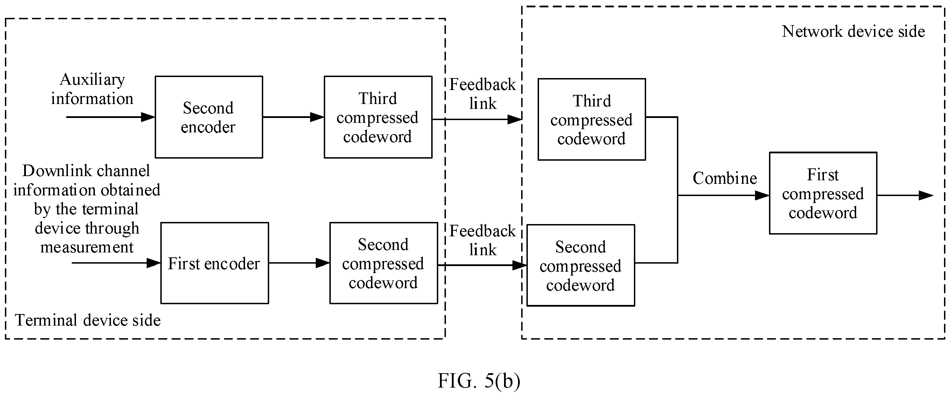

It can be learned from FIG. 5(b) that, the second compressed codeword is a compressed codeword obtained by a first encoder by encoding the first downlink channel information obtained by the terminal device through measurement, and the third compressed codeword is a compressed codeword obtained by a second encoder by encoding the auxiliary information.

It should be understood that, the first encoder and the second encoder in FIG. 5(b) are encoders obtained through training, the first encoder and the second encoder are AI networks obtained through training based on a large quantity of data sets, or the first encoder and the second encoder are encoders obtained through machine learning.

As shown in FIG. 5(b), both the first encoder and the second encoder are deployed in the terminal device, and the compressed codeword combination module is deployed in the network device. To be specific, before the network device obtains the first information, the method process shown in FIG. 4A to FIG. 4D in Example 2 further includes the following steps. S415: The terminal device obtains the auxiliary information. S416: The terminal device obtains the third compressed codeword. S413: The terminal device obtains the second compressed codeword. S417: The terminal device sends the second compressed codeword and the third compressed codeword to the network device. That the terminal device sends the second compressed codeword and the third compressed codeword to the network device in S417 may be understood as that the terminal device sends the second compressed codeword and the third compressed codeword to the network device through a feedback link (or referred to as an air interface) between the terminal device and the network device.

For example, the feedback link for feeding back the third compressed codeword by the terminal device to the network device may be the same as or different from the feedback link for feeding back the second compressed codeword by the terminal device to the network device. The terminal device may simultaneously feed back the second compressed codeword and the third compressed codeword to the network device, or may separately feed back the second compressed codeword and the third compressed codeword to the network device. How the terminal device specifically feeds back the second compressed codeword and the third compressed codeword to the network device is not limited in this application.

It can be learned from FIG. 5(b) that when the first encoder is deployed in the terminal device, that the terminal device obtains the second compressed codeword includes: The terminal device encodes, by using the first encoder, the first downlink channel information obtained through measurement, to obtain the second compressed codeword. Further, after obtaining the second compressed codeword, the terminal device sends the second compressed codeword to the network device through the feedback link, so that the network device obtains the to-be-combined second compressed codeword.

When the second encoder is also deployed in the terminal device, that the terminal device obtains the third compressed codeword includes: The terminal device first obtains the auxiliary information, and encodes the obtained auxiliary information by using the second encoder, to obtain the third compressed codeword. Further, after obtaining the third compressed codeword, the terminal device sends the third compressed codeword to the network device through the feedback link, so that the network device obtains the to-be-combined third compressed codeword.

How the terminal device obtains the auxiliary information is not limited in this application. For example, the auxiliary information may be prior information obtained by the terminal device based on historical measurement, or may be sent by another device to the terminal device.

It can be learned from FIG. 5(b) that in Example 2, the network device combines the second compressed codeword and the third compressed codeword that are received through the feedback link, to obtain the first compressed codeword.

### Example 3

The first information obtained by the network device is a first compressed codeword, the second information is a second compressed codeword, and the third information is a third compressed codeword. In this case, the first compressed codeword is obtained by combining the second compressed codeword and the third compressed codeword. In Example 3, the combination module may also be understood as a compressed codeword combination module.

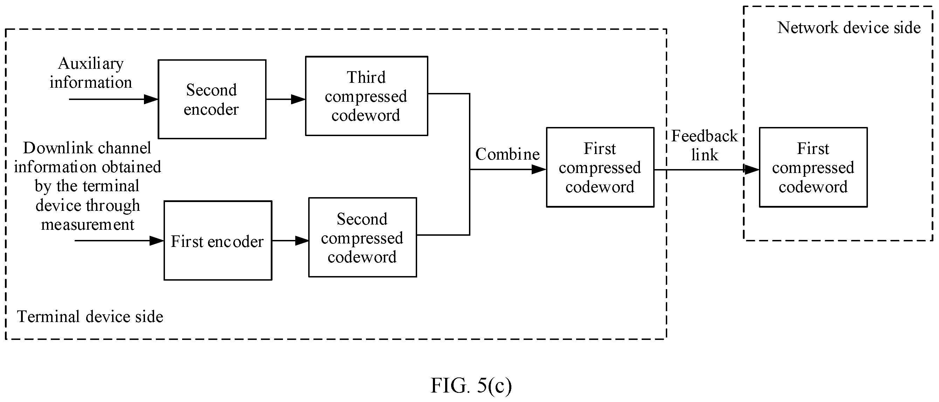

It can be learned from FIG. 5(c) that, the second compressed codeword is a compressed codeword obtained by a first encoder by encoding the first downlink channel information obtained by the terminal device through measurement, and the third compressed codeword is a compressed codeword obtained by a second encoder by encoding the auxiliary information.

It should be understood that, the first encoder and the second encoder in FIG. 5(c) are encoders obtained through training, the first encoder and the second encoder are AI networks obtained through training based on a large quantity of data sets, or the first encoder and the second encoder are encoders obtained through machine learning.

As shown in FIG. 5(c), the first encoder, the second encoder, and the compressed codeword combination module are all deployed in the terminal device. To be specific, before the network device obtains the first information, the method process shown in FIG. 4A to FIG. 4D in Example 3 further includes the following steps. S415: The terminal device obtains the auxiliary information. S416: The terminal device obtains the third compressed codeword. S413: The terminal device obtains the second compressed codeword. S418: The terminal device combines the second compressed codeword and the third compressed codeword to obtain the first compressed codeword. S419: The terminal device feeds back the first compressed codeword to the network device. That the terminal device sends the first compressed codeword to the network device in S419 may be understood as that the terminal device sends the first compressed codeword to the network device through a feedback link (or referred to as an air interface) between the terminal device and the network device.

It can be learned from FIG. 5(c) that when the first encoder is deployed in the terminal device, that the terminal device obtains the second compressed codeword includes: The terminal device encodes, by using the first encoder, the first downlink channel information obtained through measurement, to obtain the second compressed codeword.

When the second encoder is deployed in the terminal device, that the terminal device obtains the third compressed codeword includes: The terminal device first obtains the auxiliary information, and encodes the obtained auxiliary information by using the second encoder, to obtain the third compressed codeword.

Specifically, in Example 3, after obtaining the second compressed codeword and the third compressed codeword, the terminal device combines the second compressed codeword and the third compressed codeword to obtain the combined first compressed codeword, and feeds back the first compressed codeword to the network device through the feedback link.

It can be learned from FIG. 5(c) that in Example 3, the terminal device combines the second compressed codeword and the third compressed codeword, to obtain the first compressed codeword.

The first encoder and the second encoder in FIG. 5(a) to FIG. 5(c) may be the same or may be different. A dimension of the second compressed codeword may be the same as or different from a dimension of the third compressed codeword.

In a possible implementation, that the compressed codeword combination module combines the second compressed codeword and the third compressed codeword includes: The compressed codeword combination module cascades the second compressed codeword and the third compressed codeword, to obtain the first compressed codeword.

In another possible implementation, that the compressed codeword combination module combines the second compressed codeword and the third compressed codeword includes: The compressed codeword combination module cascades the second compressed codeword and the third compressed codeword based on a preset algorithm, to obtain the first compressed codeword.

It should be understood that, in this embodiment of this application, how to combine the second compressed codeword and the third compressed codeword to obtain the first compressed codeword is not limited. A compressed codeword combination solution specified in an existing protocol may be reused, or a compressed codeword combination solution in a future technology may be used. For example, simple cascading combination may be performed on the second compressed codeword and the third compressed codeword to obtain the first compressed codeword, or weighted combination may be performed on the second compressed codeword and the third compressed codeword to obtain the first compressed codeword.

### Example 4

The first information obtained by the network device is a first compressed codeword, the second information is a second compressed codeword, and the third information is the auxiliary information. In this case, the first compressed codeword is obtained by combining the second compressed codeword and the auxiliary information. In Example 4, the combination module may also be understood as an information combination module.

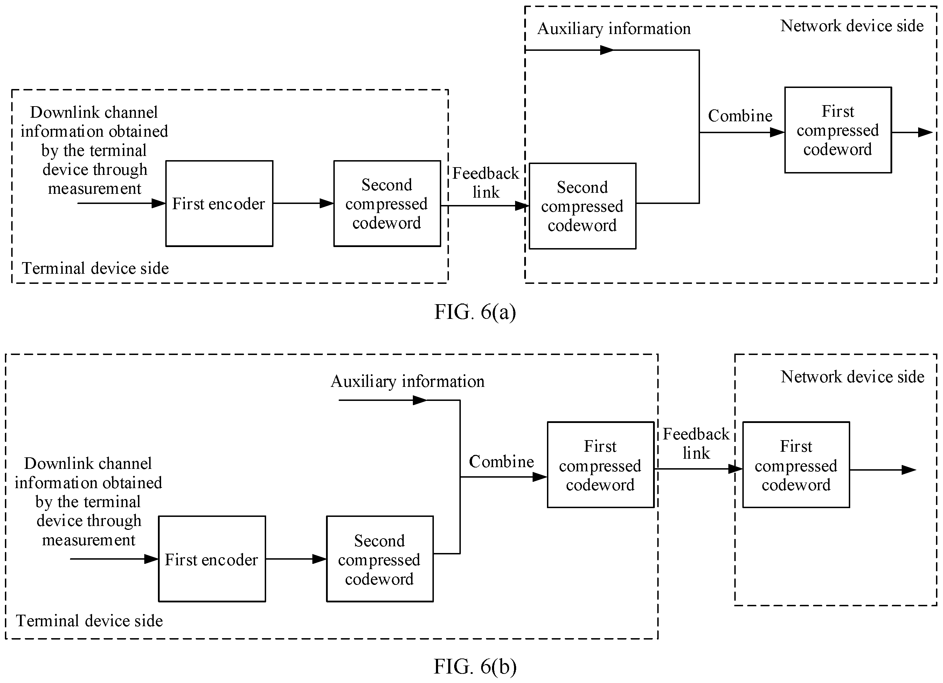

FIG. 6(a) and FIG. 6(b) are each another framework diagram for obtaining the first information according to an embodiment of this application. It can be learned from FIG. 6(a) that, the second compressed codeword is a compressed codeword obtained by a first encoder by encoding the first downlink channel information obtained by the terminal device through measurement.

It should be understood that, the first encoder in FIG. 6(a) is an encoder obtained through training, the first encoder is an AI network obtained through training based on a large quantity of data sets, or the first encoder is an encoder obtained through machine learning.

As shown in FIG. 6(a), the first encoder is deployed in the terminal device, and the information combination module is deployed in the network device. Before the network device obtains the first information, the method process shown in FIG. 4A to FIG. 4D in Example 4 further includes the following steps. S4111: The network device obtains the auxiliary information. S413: The terminal device obtains the second compressed codeword. S414: The terminal device sends the second compressed codeword to the network device. That the terminal device sends the second compressed codeword to the network device in S414 may be understood as that the terminal device sends the second compressed codeword to the network device through a feedback link (or referred to as an air interface) between the terminal device and the network device.

It can be learned from FIG. 6(a) that when the first encoder is deployed in the terminal device, that the terminal device obtains the second compressed codeword includes: The terminal device encodes, by using the first encoder, the first downlink channel information obtained through measurement, to obtain the second compressed codeword. Further, after obtaining the second compressed codeword, the terminal device sends the second compressed codeword to the network device through the feedback link, so that the network device obtains the to-be-combined second compressed codeword.

In Example 4, the network device obtains the auxiliary information.

After the network device receives the second compressed codeword, the network device combines the auxiliary information obtained by the network device and the second compressed codeword received through the feedback link, to obtain the first compressed codeword.

### Example 5

The first information obtained by the network device is a first compressed codeword, the second information is a second compressed codeword, and the third information is the auxiliary information. In this case, the first compressed codeword is obtained by combining the second compressed codeword and the auxiliary information. In Example 5, the combination module may also be understood as an information combination module.

It can be learned from FIG. 6(b) that, the second compressed codeword is a compressed codeword obtained by a first encoder by encoding the first downlink channel information obtained by the terminal device through measurement.

It should be understood that, the first encoder in FIG. 6(b) is an encoder obtained through training, the first encoder is an AI network obtained through training based on a large quantity of data sets, or the first encoder is an encoder obtained through machine learning.

As shown in FIG. 6(b), both the first encoder and the information combination module are deployed in the terminal device. Before the network device obtains the first information, the method process shown in FIG. 4A to FIG. 4D further includes the following steps. S415: The terminal device obtains the auxiliary information. S413: The terminal device obtains the second compressed codeword. S401: The terminal device combines the auxiliary information and the second compressed codeword to obtain the first compressed codeword. S419: The terminal device sends the first compressed codeword to the network device. That the terminal device sends the first compressed codeword to the network device in S419 may be understood as that the terminal device sends the first compressed codeword to the network device through a feedback link (or referred to as an air interface) between the terminal device and the network device.

It can be learned from FIG. 6(b) that when the first encoder is deployed in the terminal device, that the terminal device obtains the second compressed codeword includes: The terminal device encodes, by using the first encoder, the first downlink channel information obtained through measurement, to obtain the second compressed codeword.

Further, after obtaining the auxiliary information and the second compressed codeword, the terminal device combines the second compressed codeword and the auxiliary information obtained by the terminal device, to obtain the first compressed codeword, and sends the first compressed codeword to the network device through the feedback link, so that the network device obtains the first compressed codeword.

### Example 6

The first information obtained by the network device is a first compressed codeword, the second information is the first downlink channel information obtained by the terminal device through measurement, and the third information is the auxiliary information. In this case, the first compressed codeword is a compressed codeword obtained by a third encoder by encoding the combined auxiliary information and first downlink channel information obtained by the terminal device through measurement. In Example 6, the combination module may also be understood as an information combination module.

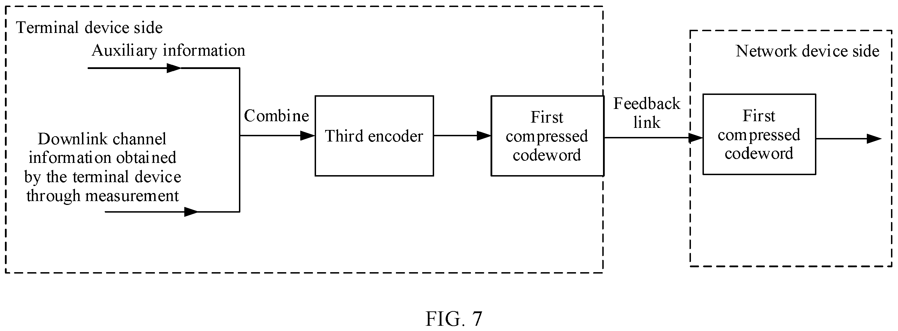

FIG. 7 is still another framework diagram for obtaining the first information according to an embodiment of this application. Both the third encoder and the information combination module are deployed in the terminal device. Before the network device obtains the first information, the method process shown in FIG. 4A to FIG. 4D in Example 6 further includes the following steps. S415: The terminal device obtains the auxiliary information. S402: The terminal device combines the auxiliary information and the first downlink channel information obtained by the terminal device through measurement. S403: The terminal device encodes combined information based on the third encoder, to obtain the first compressed codeword. S419: The terminal device feeds back the first compressed codeword to the network device. The information obtained by combining the auxiliary information obtained by the terminal device and the first downlink channel information obtained by the terminal device through measurement may be referred to as fourth information, and the fourth information is encoded by the third encoder to obtain the first compressed codeword. That the terminal device sends the first compressed codeword to the network device in S419 may be understood as that the terminal device sends the first compressed codeword to the network device through a feedback link (or referred to as an air interface) between the terminal device and the network device.

It should be understood that, the third encoder in FIG. 7 is an encoder obtained through training, the third encoder is an AI network obtained through training based on a large quantity of data sets, or the third encoder is an encoder obtained through machine learning.

The terminal device sends the first compressed codeword to the network device through the feedback link, so that the network device obtains the first compressed codeword.

### Example 7

The first information obtained by the network device is information obtained by combining the second information and the auxiliary information, the second information is the first downlink channel information obtained by the terminal device through measurement, and the third information is the auxiliary information. Specifically, in Example 7, the terminal device first encodes the first downlink channel information obtained by the terminal device through measurement based on a first encoder to obtain the second compressed codeword, and send the second compressed codeword to the network device. Then, the network device performs decoding based on a second decoder to obtain the second information.

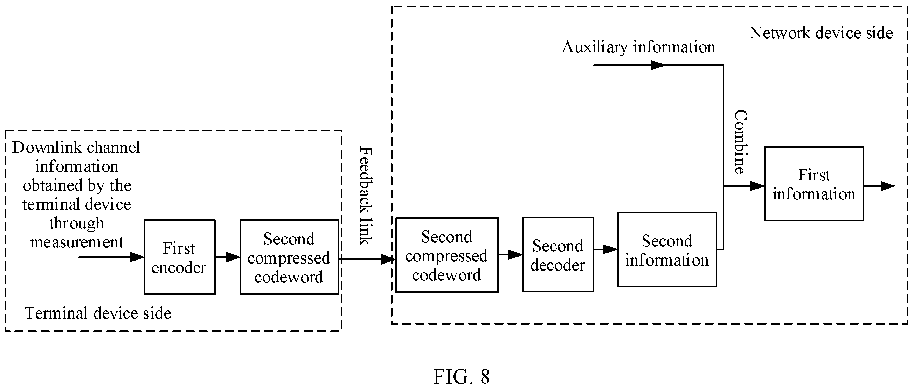

FIG. 8 is yet another framework diagram for obtaining the first information according to an embodiment of this application. The first encoder is deployed in the terminal device, and the second decoder is deployed in the network device. Before the network device obtains the first information, the method process shown in FIG. 4A to FIG. 4D further includes the following steps. S411: The network device obtains the auxiliary information. S413: The terminal device obtains the second compressed codeword. S414: The terminal device sends the second compressed codeword to the network device. S404: The network device decodes the second compressed codeword based on the second decoder to obtain the second information. S405: The network device combines the second information and the auxiliary information to obtain the first information. That the terminal device sends the second compressed codeword to the network device in S414 may be understood as that the terminal device sends the second compressed codeword to the network device through a feedback link (or referred to as an air interface) between the terminal device and the network device.

It should be understood that, the first encoder and the second decoder in FIG. 6(b) are encoders obtained through training, the first encoder and the second decoder are AI networks obtained through training based on a large quantity of data sets, or the first encoder and the second decoder are encoders obtained through machine learning. It can be learned from FIG. 8 that in Example 7, the network device combines the second information obtained by decoding the second compressed codeword received through the feedback link and the auxiliary information locally obtained by the network device, to obtain the first information.

It should be understood that combining the auxiliary information and the second information may be directly accumulating the auxiliary information and the second information. However, an algorithm for combining the second information and the auxiliary information is not limited in this embodiment of this application, may be the foregoing direct accumulation, or may be another combination manner. Details are not described herein.

Further, after obtaining the first information, the network device needs to obtain third downlink channel information based on the first information. That is, the method process shown in FIG. 4A to FIG. 4D further includes S420: The network device obtains the third downlink channel information.

Specifically, the third downlink channel information obtained by the network device in this embodiment of this application may be understood as information that needs to be fed back by the terminal device to the network device through a feedback link, for example, the first downlink channel information obtained by the terminal device through measurement. The auxiliary information has an auxiliary function in this application, so that the network device can more accurately obtain the information fed back by the terminal device.

Corresponding to Example 1 to Example 6, when the first information is the first compressed codeword, that the network device obtains the third downlink channel information based on the first information includes the following steps.

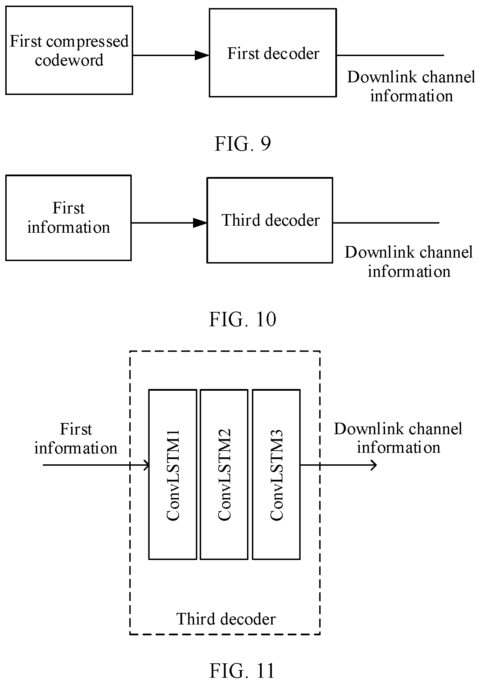

A first decoder is deployed on the network device side, and the first decoder is configured to decode the first compressed codeword to obtain the third downlink channel information. FIG. 9 is a schematic diagram for obtaining the third downlink channel information according to an embodiment of this application.

It should be understood that, the first decoder in FIG. 9 is an encoder obtained through training, the first decoder is an AI network obtained through training based on a large quantity of data sets, or the first decoder is an encoder obtained through machine learning.

Optionally, when a dimension of the first compressed codeword is consistent with a dimension of the second compressed codeword, a decompression rate of the first decoder is consistent with a compression rate of the first encoder.

Optionally, when a dimension of the first compressed codeword is consistent with a dimension of the second compressed codeword (where for example, the dimension of the first compressed codeword is greater than the dimension of the second compressed codeword), a decompression rate of the first decoder is inconsistent with a compression rate of the first encoder.

It should be understood that, in the channel measurement method provided in this embodiment of this application, because the auxiliary information is used, precision of the third downlink channel information obtained by the network device can be improved. Therefore, the compression rate of the first encoder may be increased, so that the terminal device can feed back less information, reducing feedback overheads.

In a possible implementation, corresponding to Example 7, when information obtained by decoding the first information is reconstructed third downlink channel information that needs to be obtained by the network device, that the network device obtains the third downlink channel information based on the first information includes the following steps.

A third decoder is deployed on the network device side, and the third decoder is configured to decode the first information to obtain the third downlink channel information. FIG. 10 is another schematic diagram for obtaining the third downlink channel information according to an embodiment of this application.

It should be understood that, the third decoder in FIG. 10 is an encoder obtained through training, the third decoder is an AI network obtained through training based on a large quantity of data sets, or the third decoder is an encoder obtained through machine learning.

Optionally, a structure of the third decoder is shown in FIG. 11. FIG. 11 is a schematic diagram of the third decoder according to an embodiment of this application. Three ConvLSTM units are included. The structure of the decoder may be referred to as a ConvLSTM structure, and is configured to perform decoding by using correlation of channels at a plurality of moments.

In another possible implementation, corresponding to Example 7, when the first information is reconstructed third downlink channel information that needs to be obtained by the network device, that the network device obtains, based on the first information, the third downlink channel information, namely, the first information, and does not need to further decode the first information.

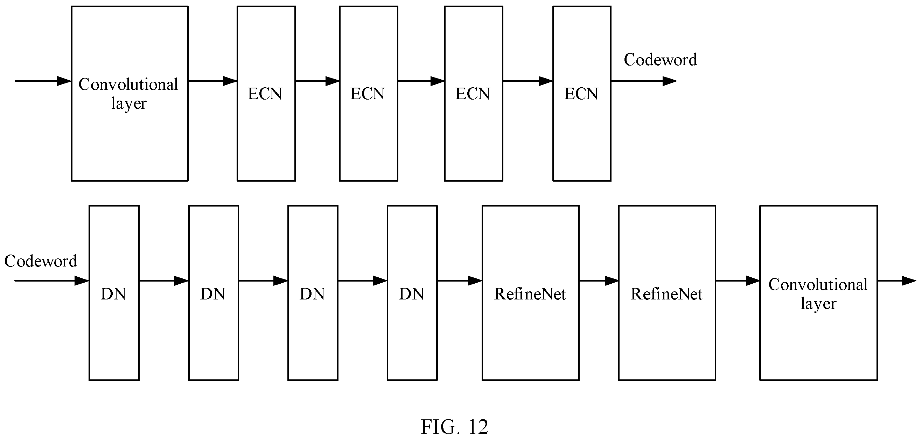

The first encoder may include one convolutional layer and four encoding convolutional network (ECN) units. Each ECN unit includes one average pooling layer and one convolutional layer. The second encoder may also include one convolutional layer and four ECN units. The first decoder includes four de-convolutional network (DN) units, two RefineNet units, and one convolutional layer. The DN unit is configured to restore the first compressed codeword to a size of an original channel dimension and complete initial downlink channel reconstruction. FIG. 12 is a schematic diagram of an encoder and a decoder according to an embodiment of this application.

The encoder and the decoder may be obtained through offline training, and are separately stored in a terminal device and a network device. It should be understood that training data of the encoder and the decoder is usually collected from all terminal devices in a cell, and a final training result of the encoder and the decoder is not an optimal compression rate for each terminal device, and training takes a long period of time. This is unfavorable to online training, and training is not performed for each terminal device.

In this embodiment of this application, information is combined by using the auxiliary information, and encoders/decoders that are favorable for different terminal device locations are selected. During offline training, channel information may be trained for a plurality of terminal device location areas, to obtain a plurality of encoders/decoders. The auxiliary information is used as prior information to select a plurality of sets of encoders/decoders.

In a possible implementation, a plurality of types of encoders are stored in the terminal device. The first encoder, the second encoder, and the third encoder are proper encoders selected based on the auxiliary information. Similarly, the first decoder, the second decoder, and the third decoder are proper decoders selected based on the auxiliary information.

Specifically, how the network device selects a proper decoder is described by using an example in which a feedback framework is shown in Example 7 and the first information needs to be decoded to obtain the third downlink channel information. First, the network device decodes the second compressed codeword based on the second decoder to obtain the second information. Then, the network device performs related weighted combination on the auxiliary information and the second information. Finally, the network device decodes the combined first information based on the third decoder to obtain the third downlink channel information. When the network device side stores a plurality of sets of second decoders and/or third decoders, the network device may compare the third downlink channel information respectively output by the plurality of sets of third decoders to obtain a proper output result, and select a decoder corresponding to the output result as a proper decoder.

In a possible implementation, the encoder and the decoder in this embodiment of this application are obtained based on training. For example, the network device and the terminal device perform joint training to obtain at least one proper encoder and at least one proper decoder. Specifically, the training data may be collected from all the terminal devices in the cell. In this embodiment of this application, how to specifically perform joint training to obtain the encoder and decoder is not limited, and a specification in an existing protocol may be used, or a specification in a future protocol may be used.

Further, in this embodiment of this application, feedback overheads may be reduced by designing a granularity of the auxiliary information. For example, the auxiliary information is the uplink channel information. In an FDD reciprocity solution, there are two feedback solutions in which the uplink channel information is used, to reduce feedback overheads of the third downlink channel information and improve feedback precision of the third downlink channel information.

Solution 1: Feedback is performed per receive antenna. The terminal device performs feedback based on each receive antenna by using a pilot port that is of a load weight and delivered by the network device, that is, the terminal device feeds back a combination coefficient based on each receive antenna.

Solution 2: Feedback is performed per flow. The terminal device performs feedback per flow by using a pilot port that is of a load weight and delivered by the network device, that is, the terminal device feeds back a combination coefficient based on each flow.

Essentially, in the foregoing two solutions, feedback is performed based on a granularity of a relevance degree of the uplink channel information, so that utilization efficiency of the uplink channel information can be improved.

Similarly, in the training frameworks shown in Example 1 to Example 7, the encoder and the decoder may also be trained per receive antenna or per flow, to obtain a corresponding encoder and a corresponding decoder.

For example, the first downlink channel information obtained by the terminal device through measurement is a concatenation of a plurality of pieces of granularity information, where the first downlink channel information obtained by the terminal device through measurement is encoded, so that a concatenation of compressed codewords corresponding to a plurality of pieces of related or independent granularity information can be output; and/or
the auxiliary information is a concatenation of the plurality of pieces of granularity information, where the auxiliary information is encoded, so that a concatenation of compressed codewords corresponding to a plurality of pieces of related or independent granularity information can be output, so that the third downlink channel information output by the decoder on the network device side is also cascaded information of the plurality of pieces of granularity information.

The feedback framework shown in Example 4 is used below to describe input content and output content of the encoder based on the foregoing different feedback granularities.

The first encoder and the first decoder are respectively deployed in the network device and the terminal device. To be specific, all terminal devices share the first encoder to encode first downlink channel information that is obtained through measurement and that corresponds to all granularities (flow/receive antenna) of each terminal device, to obtain a corresponding output compressed codeword, and feed back the compressed codeword to an air interface. Input information of the first encoder is the first downlink channel information that is obtained through measurement and that corresponds to all granularities of each terminal device, and the output information of the first encoder is compressed codeword information (including channel compression information corresponding to a plurality of granularities).

Optionally, the first downlink channel information that is obtained through measurement and that corresponds to each granularity may alternatively be separately input into the first encoder for encoding, to obtain a corresponding compressed codeword, and the compressed codeword is fed back to the air interface in a cascaded manner.

Alternatively, a plurality of sets of first encoders and first decoders are respectively deployed in the network device and the terminal device, and different terminal devices may use different first encoders.

Input information of a first encoder corresponding to each terminal device is first downlink channel information that is obtained through measurement and that corresponds to all granularities of the terminal device, and output information of the first encoder is compressed codeword information (including channel compression information separately corresponding to a plurality of granularities of the first downlink channel information obtained by the terminal device through measurement). Sequence numbers of the foregoing processes do not mean execution sequences in the foregoing method embodiments. The execution sequences of the processes should be determined based on functions and internal logic of the processes, and should not constitute any limitation on the implementation processes in embodiments of this application. In addition, it is possible that not all operations in the foregoing method embodiment need to be performed.

It should be understood that the terminal device and/or the network device in the foregoing method embodiments may perform some or all of the steps in this embodiment. These steps or operations are merely examples. In embodiments of this application, other operations or variants of the various operations may further be included.

It should be further understood that, in embodiments of this application, unless otherwise specified or in case of a logical conflict, terms and/or descriptions in different embodiments may be consistent and may be mutually referenced. Technical features in different embodiments may be combined based on an internal logical relationship of the technical features to form a new embodiment.

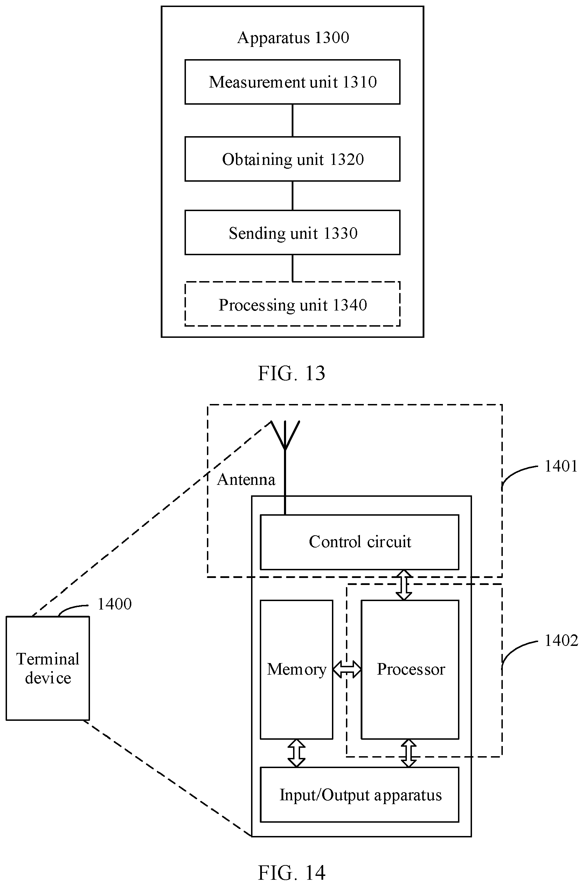

The foregoing describes in detail the channel measurement method provided in embodiments of this application with reference to FIG. 4A to FIG. 4D to FIG. 12. The following describes in detail a channel measurement apparatus provided in embodiments of this application with reference to FIG. 13 to FIG. 16.

FIG. 13 is a schematic diagram of a channel measurement apparatus 1300 according to an embodiment of this application. As shown in FIG. 13, the apparatus 1300 includes a measurement unit 1310, an obtaining unit 1320, and a sending unit 1330.

The measurement unit 1310 is configured to obtain first downlink channel information through measurement.

The obtaining unit 1320 is configured to obtain auxiliary information, where the auxiliary information includes uplink channel information and/or second downlink channel information obtained by the terminal device through measurement.

The sending unit 1330 is configured to send, to a network device, second information obtained based on the first downlink channel information and third information obtained based on the auxiliary information, where the second information and the third information are used to determine first information.

Alternatively, the sending unit 1330 is configured to send the first information to the network device, where the first information is used to determine third downlink channel information.

In an example, the first information includes a first compressed codeword, the second information includes a second compressed codeword, the third information includes a third compressed codeword, the first compressed codeword is obtained based on the second compressed codeword and the third compressed codeword, and the apparatus further includes:
a processing unit 1340, configured to encode the first downlink channel information based on a first encoder, to obtain the second compressed codeword; and
the processing unit is further configured to encode the auxiliary information based on a second encoder, to obtain the third compressed codeword, where the first encoder and the second encoder are encoders obtained through training.

In an example, that the sending unit 1330 sends the second information and the third information to the network device includes:
the sending unit 1330 sends the second compressed codeword and the third compressed codeword to the network device, where the second compressed codeword and the third compressed codeword are combined to obtain the first compressed codeword.

In an example, the processing unit 1340 is further configured to combine the second compressed codeword and the third compressed codeword to obtain the first compressed codeword; and
that the sending unit 1330 sends the first information to the network device includes:
the sending unit 1330 sends the first compressed codeword to the network device.

In an example, the first information includes a first compressed codeword, the second information includes the first downlink channel information, the third information includes the auxiliary information, and the apparatus further includes:
a processing unit 1340, configured to combine the first downlink channel information and the auxiliary information to obtain fourth information, where
the processing unit 1340 is further configured to encode the fourth information based on a third encoder, to obtain the first compressed codeword, where the third encoder is an encoder obtained through training; and
that the sending unit 1330 sends the first information to the network device includes:
   the sending unit 1330 sends the first compressed codeword to the network device.

The apparatus 1300 corresponds to the terminal device in the method embodiments. The apparatus 1300 may be the terminal device in the method embodiments, or a chip or a functional module in the terminal device in the method embodiments. Corresponding units of the apparatus 1300 are configured to perform corresponding steps performed by the terminal device in the method embodiments shown in FIG. 4A to FIG. 4D to FIG. 12.

The processing unit 1340 in the apparatus 1300 is configured to perform a corresponding step related to processing by the terminal device in the method embodiments, for example, perform step S418 of combining the second compressed codeword and the third compressed codeword in FIG. 4A to FIG. 4D, perform step S401 of combining the second compressed codeword and the auxiliary information in FIG. 4A to FIG. 4D, perform step S402 of combining the first downlink channel information and the auxiliary information in FIG. 4A to FIG. 4D, or perform step S403 of encoding the combined first downlink channel information and auxiliary information in FIG. 4A to FIG. 4D.

The obtaining unit 1320 in the apparatus 1300 is configured to perform an obtaining step of the terminal device in the method embodiments, for example, perform step S413 of obtaining the second compressed codeword in FIG. 4A to FIG. 4D, perform step S415 of obtaining the auxiliary information in FIG. 4A to FIG. 4D, perform step S416 of obtaining the third compressed codeword in FIG. 4A to FIG. 4D, perform step S413 of obtaining the second compressed codeword in FIG. 4A to FIG. 4D, or perform step S416 of obtaining the third compressed codeword in FIG. 4A to FIG. 4D.

The steps performed by the obtaining unit 1320 may be jointly performed by a receiving unit and the processing unit. For example, in step S416 of obtaining the third compressed codeword, the receiving unit may receive the auxiliary information, and the processing unit encodes the auxiliary information to obtain the third compressed codeword. Other steps are similar, and details are not described herein again.

The sending unit 1330 in the apparatus 1300 performs a sending step of the terminal device in the method embodiments, for example, perform step S414 of sending the second compressed codeword to the network device in FIG. 4A to FIG. 4D, perform step S417 of sending the second compressed codeword and the third compressed codeword to the network device in FIG. 4A to FIG. 4D, or perform step S419 of sending the first compressed codeword to the network device in FIG. 4A to FIG. 4D.

The apparatus 1300 may further include a receiving unit, configured to perform a receiving step of the terminal device, for example, receive information sent by another device. The sending unit 1330 and the receiving unit may constitute a transceiver unit, which has both a receiving function and a sending function. The processing unit 1340 may be at least one processor. The sending unit 1330 may be a transmitter or an interface circuit, and the receiving unit may be a receiver or an interface circuit. The receiver and the transmitter may be integrated to form a transceiver or an interface circuit.

Optionally, the apparatus 1300 may further include a storage unit, configured to store data and/or signaling. The processing unit 1340, the sending unit 1330, and the receiving unit may interact with or be coupled to the storage unit, for example, read or invoke the data and/or signaling in the storage unit, so that the method in the foregoing embodiments is performed.

The foregoing units may exist independently, or may be all or partially integrated.

FIG. 14 is a schematic diagram of a structure of a terminal device 1400 used in an embodiment of this application. The terminal device 1400 may be applied to the system shown in FIG. 1. For ease of description, FIG. 14 shows only main components of the terminal device. As shown in FIG. 14, the terminal device 1400 includes a processor, a memory, a control circuit, an antenna, and an input/output apparatus. The processor is configured to control the antenna and the input/output apparatus to send or receive a signal. The memory is configured to store a computer program. The processor is configured to invoke the computer program from the memory and run the computer program, to perform a corresponding procedure and/or operation performed by the terminal device in the method for registration provided in this application. Details are not described herein again.

A person skilled in the art may understand that, for ease of description, FIG. 1400 shows only one memory and one processor. An actual terminal device may include a plurality of processors and memories. The memory may also be referred to as a storage medium, a storage device, or the like. This is not limited in this embodiment of this application.

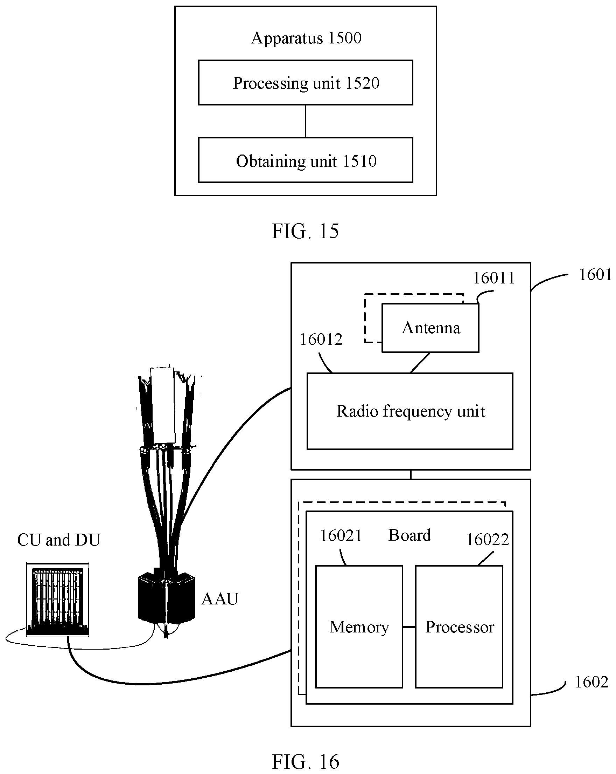

FIG. 15 is a schematic diagram of a channel measurement apparatus 1500 according to an embodiment of this application. As shown in FIG. 15, the apparatus 1500 includes an obtaining unit 1510 and a processing unit 1520.

The obtaining unit 1510 is configured to obtain first information, where the first information is obtained based on second information and third information, the second information is obtained based on first downlink channel information obtained by a terminal device through measurement, and the third information is obtained based on auxiliary information, where the auxiliary information includes uplink channel information and/or second downlink channel information obtained by the terminal device through measurement.

The processing unit 1520 is configured to obtain third downlink channel information based on the first information.

In an example, the first information includes a first compressed codeword, the second information includes a second compressed codeword, the third information includes a third compressed codeword, and the first compressed codeword is obtained based on the second compressed codeword and the third compressed codeword, where
the second compressed codeword is a compressed codeword obtained by a first encoder by encoding the first downlink channel information, the third compressed codeword is a compressed codeword obtained by a second encoder by encoding the auxiliary information, and the first encoder and the second encoder are encoders obtained through training.

In an example, when the second encoder is deployed in the apparatus, that the obtaining unit 1510 obtains the first compressed codeword includes:
the obtaining unit 1510 obtains the auxiliary information, and encodes the auxiliary information based on the second encoder, to obtain the third compressed codeword;
the obtaining unit 1510 receives the second compressed codeword; and
the obtaining unit 1510 combines the second compressed codeword and the third compressed codeword to obtain the first compressed codeword.

In an example, when the second encoder is deployed in the terminal device, that the obtaining unit 1510 obtains the first compressed codeword includes:
the obtaining unit 1510 separately receives the second compressed codeword and the third compressed codeword; and
the obtaining unit 1510 combines the second compressed codeword and the third compressed codeword to obtain the first compressed codeword; or
when the second encoder is deployed in the terminal device, that the obtaining unit 1510 obtains the first compressed codeword includes:
   the obtaining unit 1510 receives the first compressed codeword, where the first compressed codeword is obtained by combining the second compressed codeword and the third compressed codeword.

In an example, the first information includes a first compressed codeword, the second information includes a second compressed codeword, the third information includes the auxiliary information, and the first compressed codeword is obtained based on the second compressed codeword and the auxiliary information, where
the second compressed codeword is a compressed codeword obtained by a first encoder by encoding downlink channel information obtained by the terminal device through measurement, and the first encoder is an encoder obtained through training.

In an example, that the obtaining unit 1510 obtains the first information includes:
the obtaining unit 1510 obtains the auxiliary information;
the obtaining unit 1510 receives the second compressed codeword; and
the obtaining unit 1510 combines the second compressed codeword and the auxiliary information to obtain the first compressed codeword.

In an example, that the obtaining unit 1510 obtains the first compressed codeword includes:
the obtaining unit 1510 receives the first compressed codeword obtained by combining the second compressed codeword and the auxiliary information.

In an example, that the processing unit 1520 obtains third downlink channel information based on the first information includes:
the processing unit 1520 decodes the first compressed codeword based on a first decoder, to obtain the third downlink channel information, where the first decoder is a decoder obtained through training.

In an example, that the processing unit 1520 obtains third downlink channel information based on the first information includes:
the processing unit 1520 decodes the first information based on a third decoder, to obtain the downlink channel information, where the third decoder is a decoder obtained through training; or
the first information includes the third downlink channel information.

The apparatus 1500 corresponds to the network device in the method embodiments. The apparatus 1500 may be the network device in the method embodiments, or a chip or a functional module in the network device in the method embodiments. Corresponding units of the apparatus 1500 are configured to perform corresponding steps performed by the network device in the method embodiments shown in FIG. 4A to FIG. 4D to FIG. 12.

The obtaining unit 1510 in the apparatus 1500 is configured to perform an obtaining step of the terminal device in the method embodiments, for example, perform step S412 of obtaining the third compressed codeword in FIG. 4A to FIG. 4D, perform step S411 of obtaining the auxiliary information in FIG. 4A to FIG. 4D, perform step S410 of obtaining the first information in FIG. 4A to FIG. 4D, or perform step S405 of combining the auxiliary information and the second information in FIG. 4A to FIG. 4D.

The processing unit 1520 in the apparatus 1500 is configured to perform a corresponding step related to processing in the network device, for example, perform step S420 of obtaining the third downlink channel information in FIG. 4A to FIG. 4D.

The apparatus 1500 may further include a receiving unit and a sending unit. The receiving unit and the sending unit may constitute a transceiver unit, which has both a receiving function and a sending function. The processing unit 1520 may be at least one processor. The sending unit may be a transmitter or an interface circuit. The receiving unit may be a receiver or an interface circuit. The receiver and the transmitter may be integrated to form a transceiver or an interface circuit.

Optionally, the apparatus 1500 may further include a storage unit, configured to store data and/or signaling. The processing unit 1520, the sending unit, and the receiving unit may interact with or be coupled to the storage unit, for example, read or invoke the data and/or signaling in the storage unit, so that the method in the foregoing embodiments is performed.

The foregoing units may exist independently, or may be all or partially integrated.

FIG. 16 is a schematic diagram of a structure of a network device 1600 used in an embodiment of this application. The network device 1600 may be configured to implement a function of the network device in the foregoing channel measurement method. FIG. 16 may be a schematic diagram of a structure of the network device.

In a possible manner, for example, in some implementation solutions in a 5G communication system, the network device 1600 may include a CU, a DU, and an AAU. Compared with an access network device that is in an LTE communication system and that includes one or more baseband units (baseband units, BBUs) and one or more radio frequency units such as remote radio units (remote radio units, RRUs) 1601, a non-real-time part of an original BBU is redefined as a CU, which is responsible for processing a non-real-time protocol and service; some physical layer processing functions of the BBU are combined into an AAU with an original RRU and passive antenna; and remaining functions of the BBU are defined as a DU, which is responsible for processing a physical layer protocol and a real-time service. In short, the CU and the DU are distinguished between each other based on real-time performance of processed content, and the AAU is a combination of the RRU and an antenna.

The CU, the DU, and the AAU may be deployed separately or together. Therefore, there may be a plurality of network deployment forms. A possible deployment form is consistent with that of a conventional 4G access network device, in which the CU and the DU are deployed on same hardware. It should be understood that, FIG. 16 is merely an example, and constitutes no limitation on the protection scope of this application. For example, a deployment form may alternatively be that DUs are deployed in a 5G BBU equipment room, CUs or DUs are deployed together, and the CUs are centralized at a higher level.

The AAU 1601 may implement a receiving function and a sending function, and is referred to as a transceiver unit 1601. Optionally, the transceiver unit 1601 may also be referred to as a transceiver machine, a transceiver circuit, a transceiver, or the like, and may include at least one antenna 16011 and a radio frequency unit 16012. Optionally, the transceiver unit 1601 may include a receiving unit and a sending unit. The receiving unit may correspond to a receiver (or referred to as a receiver machine or a receiver circuit), and the sending unit may correspond to a transmitter (or referred to as a transmitter machine or a transmitter circuit). The "CU and DU" 1602 may implement an internal processing function, and are referred to as a processing unit 1602. Optionally, the processing unit 1602 may control the access network device or the like, and may be referred to as a controller. The AAU 1601, and the "CU and DU" 1602 may be physically disposed together, or may be physically disposed separately.

In addition, the access network device is not limited to the form shown in FIG. 16, and may alternatively be in another form. For example, the access network device includes the BBU and an ARU, includes the BBU and the AAU, may be a CPE, or may be in another form. This is not limited in this application.

It should be understood that the network device 1600 shown in FIG. 16 can implement the network device in the method embodiments shown in FIG. 4A to FIG. 4D to FIG. 12. Operations and/or functions of the units in the network device 1600 are used to implement corresponding procedures performed by the network device in the foregoing method embodiments of this application. To avoid repetition, detailed descriptions are appropriately omitted herein. The structure of the network device shown in FIG. 16 is merely a possible form, and should not constitute any limitation on embodiments of this application. In this application, a possibility that there may be a network device structure in another form in the future is not excluded.

An embodiment of this application further provides a communication system, including the foregoing terminal device and the foregoing network device.

This application further provides a computer-readable storage medium. The computer-readable storage medium stores instructions. When the instructions are run on a computer, the computer is enabled to perform steps performed by the terminal device in the methods shown in FIG. 4A to FIG. 4D to FIG. 12.

This application further provides a computer-readable storage medium. The computer-readable storage medium stores instructions. When the instructions are run on a computer, the computer is enabled to perform steps performed by the network device in the methods shown in FIG. 4A to FIG. 4D to FIG. 12.

This application further provides a computer program product including instructions. When the computer program product is run on a computer, the computer is enabled to perform steps performed by the terminal device in the methods shown in FIG. 4A to FIG. 4D to FIG. 12.

This application further provides a computer program product including instructions. When the computer program product is run on a computer, the computer is enabled to perform steps performed by the network device in the methods shown in FIG. 4A to FIG. 4D to FIG. 12.

This application further provides a chip, including a processor. The processor is configured to read and run a computer program stored in a memory, to perform a corresponding operation and/or procedure performed by the terminal device in the channel measurement method provided in this application. Optionally, the chip further includes a memory. The memory is connected to the processor by using a circuit or a wire, and the processor is configured to read and execute a computer program in the memory. Further, optionally, the chip further includes a communication interface, and the processor is connected to the communication interface. The communication interface is configured to receive data and/or information to be processed, and the processor obtains the data and/or information from the communication interface, and processes the data and/or information. The communication interface may be an input/output interface, an interface circuit, an output circuit, an input circuit, a pin, a related circuit, or the like on the chip. The processor may alternatively be embodied as a processing circuit or a logic circuit.

This application further provides a chip, including a processor. The processor is configured to read and run a computer program stored in a memory, to perform a corresponding operation and/or procedure performed by the network device in the channel measurement method provided in this application. Optionally, the chip further includes a memory. The memory is connected to the processor by using a circuit or a wire, and the processor is configured to read and execute a computer program in the memory. Further, optionally, the chip further includes a communication interface, and the processor is connected to the communication interface. The communication interface is configured to receive data and/or information to be processed, and the processor obtains the data and/or information from the communication interface, and processes the data and/or information. The communication interface may be an input/output interface, an interface circuit, an output circuit, an input circuit, a pin, a related circuit, or the like on the chip. The processor may alternatively be embodied as a processing circuit or a logic circuit.

The foregoing chip may be replaced with a chip system, and details are not described herein.

In this application, the terms "include", "have", and any other variants mean to cover the non-exclusive inclusion, for example, a process, method, system, product, or device that includes a list of steps or units is not necessarily limited to those steps or units that are clearly listed, but may include other steps or units not expressly listed or inherent to such a process, method, product, or device.

A person of ordinary skill in the art may be aware that, in combination with the examples described in embodiments disclosed in this specification, units and algorithm steps may be implemented by electronic hardware or a combination of computer software and the electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for detailed working processes of the foregoing systems, apparatuses, and units, refer to corresponding processes in the foregoing method embodiments. Details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. A part or all of the units may be selected based on actual requirements to achieve the objectives of the solutions of the embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the existing technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

In addition, the term "and/or" in this application describes only an association relationship for describing associated objects and represents that three relationships may exist. For example, A and/or B may indicate the following three cases: Only A exists, both A and B exist, and only B exists. In addition, the character "/" in this specification usually indicates an "or" relationship between the associated objects. The term "at least one" in this application may represent "one" and "two or more". For example, at least one of A, B, and C may indicate the following seven cases: Only A exists, only B exists, only C exists, both A and B exist, both A and C exist, both C and B exist, and A, B, and C exist.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A channel measurement method, comprising:
obtaining, by a network device, first information, wherein the first information is obtained based on second information and third information, the second information is obtained based on first downlink channel information obtained by a terminal device through measurement, and the third information is obtained based on auxiliary information, wherein the auxiliary information comprises uplink channel information and/or second downlink channel information obtained by the terminal device through measurement; and
obtaining, by the network device, third downlink channel information based on the first information.

2. The method according to claim 1, wherein the first information comprises a first compressed codeword, the second information comprises a second compressed codeword, the third information comprises a third compressed codeword, and the first compressed codeword is obtained based on the second compressed codeword and the third compressed codeword, wherein
the second compressed codeword is a compressed codeword obtained by a first encoder by encoding the first downlink channel information, the third compressed codeword is a compressed codeword obtained by a second encoder by encoding the auxiliary information, and the first encoder and the second encoder are encoders obtained through training.

3. The method according to claim 2, wherein when the second encoder is deployed in the network device, the obtaining, by the network device, the first compressed codeword comprises:
obtaining, by the network device, the auxiliary information, and encoding the auxiliary information based on the second encoder, to obtain the third compressed codeword;
receiving, by the network device, the second compressed codeword; and
combining, by the network device, the second compressed codeword and the third compressed codeword to obtain the first compressed codeword.

4. The method according to claim 2, wherein when the second encoder is deployed in the terminal device, the obtaining, by the network device, the first compressed codeword comprises:
separately receiving, by the network device, the second compressed codeword and the third compressed codeword; and
combining, by the network device, the second compressed codeword and the third compressed codeword to obtain the first compressed codeword; or
when the second encoder is deployed in the terminal device, the obtaining, by the network device, the first compressed codeword comprises:
receiving, by the network device, the first compressed codeword, wherein the first compressed codeword is obtained by combining the second compressed codeword and the third compressed codeword.

5. The method according to claim 1, wherein the first information comprises a first compressed codeword, the second information comprises a second compressed codeword, the third information comprises the auxiliary information, and the first compressed codeword is obtained based on the second compressed codeword and the auxiliary information, wherein
the second compressed codeword is a compressed codeword obtained by a first encoder by encoding downlink channel information obtained by the terminal device through measurement, and the first encoder is an encoder obtained through training.

6. The method according to claim 5, wherein the obtaining, by a network device, first information comprises:
obtaining, by the network device, the auxiliary information;
receiving, by the network device, the second compressed codeword; and
combining, by the network device, the second compressed codeword and the auxiliary information to obtain the first compressed codeword.

7. The method according to claim 5, wherein the obtaining, by the network device, the first compressed codeword comprises:
receiving, by the network device, the first compressed codeword obtained by combining the second compressed codeword and the auxiliary information.

8. The method according to claim 1, wherein the first information comprises a first compressed codeword, the second information comprises the first downlink channel information, and the third information comprises the auxiliary information, wherein
the first compressed codeword is a compressed codeword obtained by a third encoder by encoding the combined auxiliary information and first downlink channel information, and the third encoder is an encoder obtained through training; and
the obtaining, by the network device, the first compressed codeword comprises:
receiving, by the network device, the first compressed codeword.

9. The method according to any one of claims 2 to 8, wherein the obtaining, by the network device, third downlink channel information based on the first information comprises:
decoding, by the network device, the first compressed codeword based on a first decoder, to obtain the third downlink channel information, wherein the first decoder is a decoder obtained through training, and
when a dimension of the first compressed codeword is consistent with a dimension of the second compressed codeword, a decompression rate of the first decoder is consistent with a compression rate of the first encoder; or
when a dimension of the first compressed codeword is inconsistent with a dimension of the second compressed codeword, a decompression rate of the first decoder is inconsistent with a compression rate of the first encoder.

10. The method according to claim 1, wherein the third information comprises the auxiliary information, and the obtaining, by a network device, first information comprises:
receiving, by the network device, a second compressed codeword, wherein the second compressed codeword is a compressed codeword obtained by a first encoder by encoding the first downlink channel information, and the first encoder is an encoder obtained through training;
decoding, by the network device, the second compressed codeword based on a second decoder, to obtain the second information, wherein the second decoder is a decoder obtained through training;
obtaining, by the network device, the auxiliary information; and
combining, by the network device, the second information and the auxiliary information to obtain the first information.

11. The method according to claim 10, wherein the obtaining, by the network device, third downlink channel information based on the first information comprises:
decoding, by the network device, the first information based on a third decoder, to obtain the downlink channel information, wherein the third decoder is a decoder obtained through training; or
the first information comprises the third downlink channel information.

12. The method according to any one of claims 1 to 11, wherein the second downlink channel information is prior downlink channel information obtained by the terminal device through measurement, and the third downlink channel information is downlink channel information reconstructed by the network device.

13. A channel measurement method, comprising:
obtaining, by a terminal device, first downlink channel information through measurement;
obtaining, by the terminal device, auxiliary information, wherein the auxiliary information comprises uplink channel information and/or second downlink channel information obtained by the terminal device through measurement; and
sending, by the terminal device to a network device, second information obtained based on the first downlink channel information and third information obtained based on the auxiliary information, wherein the second information and the third information are used to determine first information; or
sending, by the terminal device, first information to a network device, wherein the first information is used to determine third downlink channel information.

14. The method according to claim 13, wherein the first information comprises a first compressed codeword, the second information comprises a second compressed codeword, the third information comprises a third compressed codeword, the first compressed codeword is obtained based on the second compressed codeword and the third compressed codeword, and the method further comprises:
encoding, by the terminal device, the first downlink channel information based on a first encoder, to obtain the second compressed codeword; and
encoding, by the terminal device, the auxiliary information based on a second encoder, to obtain the third compressed codeword, wherein the first encoder and the second encoder are encoders obtained through training.

15. The method according to claim 14, wherein the sending, by the terminal device, the second information and the third information to the network device comprises:
sending, by the terminal device, the second compressed codeword and the third compressed codeword to the network device, wherein the second compressed codeword and the third compressed codeword are combined to obtain the first compressed codeword.

16. The method according to claim 14, wherein the method further comprises:
combining, by the terminal device, the second compressed codeword and the third compressed codeword to obtain the first compressed codeword; and
the sending, by the terminal device, first information to the network device comprises:
sending, by the terminal device, the first compressed codeword to the network device.

17. The method according to claim 13, wherein the first information comprises a first compressed codeword, the second information comprises the first downlink channel information, the third information comprises the auxiliary information, and the method further comprises:
combining, by the terminal device, the first downlink channel information and the auxiliary information to obtain fourth information; and
encoding, by the terminal device, the fourth information based on a third encoder, to obtain the first compressed codeword, wherein the third encoder is an encoder obtained through training; and
the sending, by the terminal device, first information to the network device comprises:
sending, by the terminal device, the first compressed codeword to the network device.

18. The method according to claim 13, wherein the first information comprises a first compressed codeword, the second information comprises the first downlink channel information, the third information comprises the auxiliary information, and the method further comprises:
encoding, by the terminal device, the first downlink channel information based on a first encoder, to obtain a second compressed codeword, wherein the first encoder is an encoder obtained through training; and
combining, by the terminal device, the second compressed codeword and the auxiliary information to obtain the first compressed codeword; and
the sending, by the terminal device, first information to the network device comprises:
sending, by the terminal device, the first compressed codeword to the network device.

19. The method according to any one of claims 13 to 18, wherein the second downlink channel information is prior downlink channel information obtained by the terminal device through measurement, and the third downlink channel information is downlink channel information reconstructed by the network device.

20. A channel measurement apparatus, comprising:
an obtaining unit, configured to obtain first information, wherein the first information is obtained based on second information and third information, the second information is obtained based on first downlink channel information obtained by a terminal device through measurement, and the third information is obtained based on auxiliary information, wherein the auxiliary information comprises uplink channel information and/or second downlink channel information obtained by the terminal device through measurement; and
a processing unit, configured to obtain third downlink channel information based on the first information.

21. The apparatus according to claim 20, wherein the first information comprises a first compressed codeword, the second information comprises a second compressed codeword, the third information comprises a third compressed codeword, and the first compressed codeword is obtained based on the second compressed codeword and the third compressed codeword, wherein
the second compressed codeword is a compressed codeword obtained by a first encoder by encoding the first downlink channel information, the third compressed codeword is a compressed codeword obtained by a second encoder by encoding the auxiliary information, and the first encoder and the second encoder are encoders obtained through training.

22. The apparatus according to claim 21, wherein when the second encoder is deployed in the apparatus, that the obtaining unit obtains the first compressed codeword comprises:
the obtaining unit obtains the auxiliary information, and encodes the auxiliary information based on the second encoder, to obtain the third compressed codeword;
the obtaining unit receives the second compressed codeword; and
the obtaining unit combines the second compressed codeword and the third compressed codeword to obtain the first compressed codeword.

23. The apparatus according to claim 22, wherein when the second encoder is deployed in the terminal device, that the obtaining unit obtains the first compressed codeword comprises:
the obtaining unit separately receives the second compressed codeword and the third compressed codeword; and
the obtaining unit combines the second compressed codeword and the third compressed codeword to obtain the first compressed codeword; or
when the second encoder is deployed in the terminal device, that the obtaining unit obtains the first compressed codeword comprises:
the obtaining unit receives the first compressed codeword, wherein the first compressed codeword is obtained by combining the second compressed codeword and the third compressed codeword.

24. The apparatus according to claim 20, wherein the first information comprises a first compressed codeword, the second information comprises a second compressed codeword, the third information comprises the auxiliary information, and the first compressed codeword is obtained based on the second compressed codeword and the auxiliary information, wherein
the second compressed codeword is a compressed codeword obtained by a first encoder by encoding downlink channel information obtained by the terminal device through measurement, and the first encoder is an encoder obtained through training.

25. The apparatus according to claim 24, wherein that the obtaining unit obtains the first information comprises:
the obtaining unit obtains the auxiliary information;
the obtaining unit receives the second compressed codeword; and
the obtaining unit combines the second compressed codeword and the auxiliary information to obtain the first compressed codeword.

26. The apparatus according to claim 24, wherein that the obtaining unit obtains the first compressed codeword comprises:
the obtaining unit receives the first compressed codeword obtained by combining the second compressed codeword and the auxiliary information.

27. The apparatus according to claim 20, wherein the first information comprises a first compressed codeword, the second information comprises the first downlink channel information, and the third information comprises the auxiliary information, wherein
the first compressed codeword is a compressed codeword obtained by a third encoder by encoding the combined auxiliary information and first downlink channel information, and the third encoder is an encoder obtained through training; and
that the obtaining unit obtains the first compressed codeword comprises:
the obtaining unit receives the first compressed codeword.

28. The apparatus according to any one of claims 21 to 27, wherein that the processing unit obtains the third downlink channel information based on the first information comprises:
the processing unit decodes the first compressed codeword based on a first decoder, to obtain the third downlink channel information, wherein the first decoder is a decoder obtained through training, and
when a dimension of the first compressed codeword is consistent with a dimension of the second compressed codeword, a decompression rate of the first decoder is consistent with a compression rate of the first encoder.
when a dimension of the first compressed codeword is inconsistent with a dimension of the second compressed codeword, a decompression rate of the first decoder is inconsistent with a compression rate of the first encoder.

29. The apparatus according to claim 20, wherein the third information comprises the auxiliary information, and that the obtaining unit obtains the first information comprises:
the obtaining unit receives a second compressed codeword, wherein the second compressed codeword is a compressed codeword obtained by a first encoder by encoding the first downlink channel information, and the first encoder is an encoder obtained through training;
the processing unit is further configured to decode the second compressed codeword based on a second decoder, to obtain the second information, wherein the second decoder is a decoder obtained through training;
the obtaining unit obtains the auxiliary information; and
the obtaining unit combines the second information and the auxiliary information to obtain the first information.

30. The apparatus according to claim 20, wherein that the processing unit obtains the third downlink channel information based on the first information comprises:
the processing unit decodes the first information based on a third decoder, to obtain the downlink channel information, wherein the third decoder is a decoder obtained through training; or
the first information comprises the third downlink channel information.

31. The apparatus according to any one of claims 20 to 30, wherein the second downlink channel information is prior downlink channel information obtained by the terminal device through measurement, and the third downlink channel information is downlink channel information reconstructed by the network device.

32. A channel measurement apparatus, comprising:
a measurement unit, configured to obtain first downlink channel information through measurement;
an obtaining unit, configured to obtain auxiliary information, wherein the auxiliary information comprises uplink channel information and/or second downlink channel information obtained by the apparatus through measurement; and
a sending unit, configured to send, to the network device, second information obtained based on the first downlink channel information and third information obtained based on the auxiliary information, wherein the second information and the third information are used to determine first information; or
a sending unit, configured to send first information to the network device, wherein the first information is used to determine third downlink channel information.

33. The apparatus according to claim 32, wherein the first information comprises a first compressed codeword, the second information comprises a second compressed codeword, the third information comprises a third compressed codeword, the first compressed codeword is obtained based on the second compressed codeword and the third compressed codeword, and the apparatus further comprises:
a processing unit, configured to encode the first downlink channel information based on a first encoder, to obtain the second compressed codeword; and
the processing unit is further configured to encode the auxiliary information based on a second encoder, to obtain the third compressed codeword, wherein the first encoder and the second encoder are encoders obtained through training.

34. The apparatus according to claim 33, wherein that the sending unit sends the second information and the third information to the network device comprises:
the sending unit sends the second compressed codeword and the third compressed codeword to the network device, wherein the second compressed codeword and the third compressed codeword are combined to obtain the first compressed codeword.

35. The apparatus according to claim 33, wherein the processing unit is further configured to combine the second compressed codeword and the third compressed codeword to obtain the first compressed codeword; and
that the sending unit sends the first information to the network device comprises:
the sending unit sends the first compressed codeword to the network device.

36. The apparatus according to claim 32, wherein the first information comprises a first compressed codeword, the second information comprises the first downlink channel information, the third information comprises the auxiliary information, and the apparatus further comprises:
a processing unit, configured to combine the first downlink channel information and the auxiliary information to obtain fourth information, wherein
the processing unit is further configured to encode the fourth information based on a third encoder, to obtain the first compressed codeword, wherein the third encoder is an encoder obtained through training; and
that the sending unit sends the first information to the network device comprises:
the sending unit sends the first compressed codeword to the network device.

37. The apparatus according to claim 32, wherein the first information comprises a first compressed codeword, the second information comprises the first downlink channel information, the third information comprises the auxiliary information, and the apparatus further comprises:
a processing unit, configured to encode the first downlink channel information based on a first encoder, to obtain a second compressed codeword, wherein the first encoder is an encoder obtained through training, wherein
the processing unit is further configured to combine the second compressed codeword and the auxiliary information to obtain the first compressed codeword; and
that the sending unit sends the first information to the network device comprises:
the sending unit sends the first compressed codeword to the network device.

38. The apparatus according to any one of claims 32 to 37, wherein the second downlink channel information is prior downlink channel information obtained by the terminal device through measurement, and the third downlink channel information is downlink channel information reconstructed by the network device.

39. A communication system, comprising the channel measurement apparatus according to any one of claims 20 to 31 and the channel measurement apparatus according to any one of claims 32 to 38.

40. A communication apparatus, comprising a processor, wherein the processor is connected to a memory, the memory is configured to store a computer program, and the processor is configured to execute the computer program stored in the memory, to enable the apparatus to perform the method according to any one of claims 1 to 12.

41. A communication apparatus, comprising a processor, wherein the processor is connected to a memory, the memory is configured to store a computer program, and the processor is configured to execute the computer program stored in the memory, to enable the apparatus to perform the method according to any one of claims 13 to 19.

42. A computer-readable storage medium, storing a computer program, wherein when the computer program is run, the method according to any one of claims 1 to 12 is implemented.

43. A computer-readable storage medium, storing a computer program, wherein when the computer program is run, the method according to any one of claims 13 to 19 is implemented.
